# EUROPEAN PATENT SPECIFICATION

(11) **EP 3 357 676 B1**
(45) Date of publication and mention of the grant of the patent: **21.07.2021**
(21) Application number: 17397505.3
(22) Date of filing: 06.02.2017
(51) Int. Cl.: B29D 30/66, B60C 11/16

(54) **A DEVICE FOR STUDDING A TIRE**
VORRICHTUNG ZUM BESPIKEN EINES REIFENS
DISPOSITIF PERMETTANT DE CLOUTER UN PNEU

(43) Date of publication of application: 08.08.2018
(60) Divisional application: 21179392.2
(73) Proprietor: Nokian Renkaat Oyj, 37101 Nokia (FI)
(72) Inventor: Ajoviita, Tommi, 36240 Kangasala (FI); Liukkula, Mikko, 37830 Viiala (FI); Kukkonen, Esko, 33710 Tampere (FI); Alajuuma, Jukka, 33480 Ylöjärvi (FI)
(74) Representative: Berggren Oy

(56) References cited:
- EP-A1- 3 088 170
- DE-A1-102009 026 112
- DE-B- 1 229 282
- JP-A- S5 795 203
- JP-U- H0 452 909
- SE-L- 8 402 522
- US-A- 3 348 291
- US-A1- 2016 311 267

## Description

### Technical field

The invention relates to devices for studding pneumatic tires. More precisely, the present invention relates to a device for driving antiskid studs into stud holes of a tread of a pneumatic tire according to independent claim 1 and to the use of the device according to the independent claim 12. Some embodiments of the invention relate to devices for studding pneumatic tires in such a way that some studs are arranged in a different orientation in the tire than others. Some embodiments of the invention relate to devices for studding pneumatic tires with different types of studs.

### Background

Pneumatic tires are used in vehicles, such as passenger cars, trucks, and machines, such as forest machines, earth movers, etc. Some pneumatic tires have antiskid studs to improve grip on snow or icy road or ground. Typically such antiskid studs are inserted into a vulcanized tire having pre-formed recessions for the antiskid studs, i.e. stud holes. Various devices have been used to insert antiskid studs into the pneumatic tire.

The known devices for studding tires are designed to use only one type of studs and to apply them in only one orientation, or in a random orientation as defined by the orientation in which the antiskid stud enters the studding device.

It has recently been found that the grip and handling properties of a tire with antiskid studs can be improved by carefully orienting the studs depending on the location on the tire tread and/or using different types of studs in different parts of the pneumatic tire. However, the present studding devices are not optimal for such studding, since they typically cannot orient the stud in a manner needed for optimal grip. Moreover, they are typically not suitable for use, when different types of studs need to be used subsequently.

Documents JP S57 95203 and SE 8 402 522 disclose studding devices comprising two studding tools each studding tool equipped with a studding head. The studding heads of either one of the tool can be used independently from each other to drive studs into a tread of a tire.

### Summary

In order to solve the aforementioned problems, a device for studding a tire is disclosed. Such devices are disclosed in the appended examples 101 - 112 and 199 - 215 and in the appended claims. Moreover use of such devices is disclosed in examples 151 and 251. The use of the device is a method for studding a pneumatic tire. Furthermore such devices can be used to manufacture a tire according to the examples 301 - 310.

### Brief description of the drawings

- Fig. 1: shows a pneumatic tire without studs and having stud holes for receiving studs,
- Fig. 2: shows a device for studding a tire and a tire that is being studded,
- Fig. 3a: shows a part of a device for studding a tire and a part of a tire that is being studded,
- Fig. 3b: shows a part of a device for studding a tire in more detail,
- Fig. 3c: shows a part of a device for studding a tire and a part of a tire that is being studded,
- Figs. 4a and 4b: show a part of a device for studding a tire and a part of a tire that is being studded,
- Figs. 5a and 5b: show a part of a device for studding a tire and a tire that is being studded,
- Figs. 6a to 6d: show a studding tool having two studding heads,
- Figs. 7a and 7b: show a studding tool having two studding heads that are simultaneously pivotable about a common pivot,
- Figs. 8a to 8i: shows different studs that can be used e.g. in a device for studding a tire,
- Fig. 9a: shows as a side view a part of a studded pneumatic tire manufacturable by a device of the present invention, and
- Fig. 9b: shows as a cross sectional view a part of a studded pneumatic tire manufacturable by a device of the present invention.

### Detailed description

In this description, a tire or a pneumatic tire refers to a tire or a pneumatic tire that is only at most partly studded. Moreover, a device for studding a tire is a device for inserting studs into stud recessions (i.e. stud holes) of an at most partly studded pneumatic tire. The short term "stud" is used for "antiskid stud", even if both terms are used.

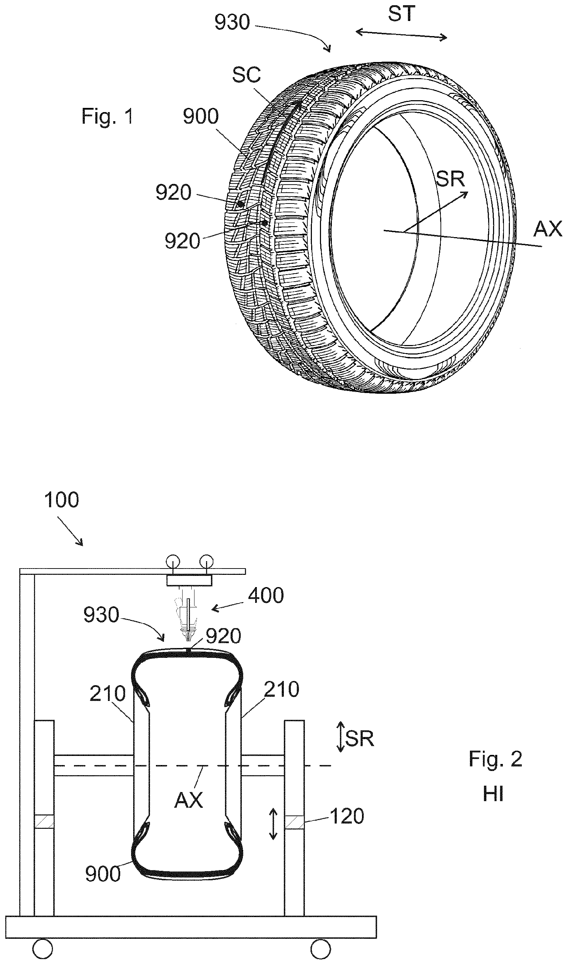

Fig. 1 shows in a perspective view a pneumatic tire 900. The pneumatic tire 900 is configured to rotate about an axis of rotation AX. A transverse direction ST is parallel to axis of rotation AX. A radial direction SR is perpendicular to the axis of rotation AX. The tire 900 has a tread 930. The tread 930 is arranged, in use of the tire, to make a rolling contact with a surface, such as a surface of a road or ground. The tire tread 930 is formed by pattern parts in the form of circumferential ribs and/or in the form of blocks. At each point of the tread 930, a circumferential direction SC is perpendicular to both the radial direction SR at that point and the transverse direction ST. The tread 930 of the pneumatic tire 900 (i.e. at most partly studded pneumatic tire 900) limits stud recessions 920, i.e. stud holes 920. The stud holes 920 are blind holes for receiving the anti-skid studs.

Fig. 2 shows a device 100 for studding a pneumatic tire 900. In Fig. 2, the axis AX of rotation is horizontal. Correspondingly, Fig. 2 shows a cross section of a pneumatic tire on a plane having the directions of the axis of AX rotation and a radial direction SR, which in the figure is vertical. As an example, the tread 930 of the tire 900 includes a stud hole 920. The figures only explain the invention and are not necessarily to scale.

The device 100 of Fig. 2 comprises a tire holder 210 for holding the pneumatic tire 900 to be studded. The tire holder 210 defines an axial direction AX, which is parallel to the axis of rotation AX of the pneumatic tire 900, which is configured to be held by the tire holder 210. The device 100 comprises a primary studding head 400.

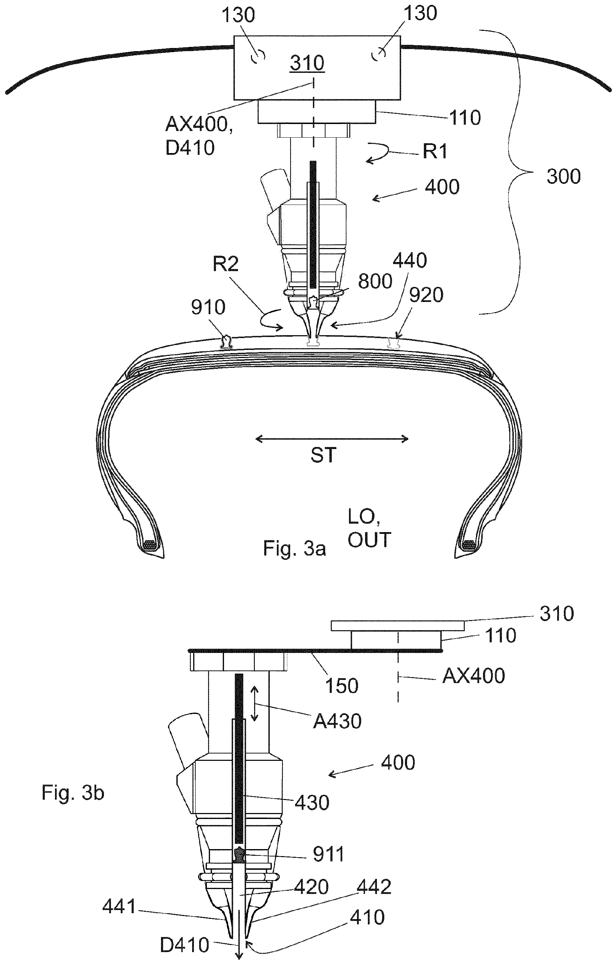

The primary studding head 400 is disclosed in more detail in Figs. 3a and 3b. Referring in particular to Fig. 3b, the primary studding head 400 comprises a primary mouth 410. The primary mouth 410 is configured to inject a primary stud 911 out of the primary studding head 400 into one of the stud holes 920 of the pneumatic tire 900 in a primary direction D410. The primary studding head 400 comprises a primary bore 420 ending at the primary mouth 410. The primary bore 420 is configured to guide the primary stud 911. The primary studding head 400 comprises a primary pusher 430 movable in said primary bore 420. The movability of the pusher 430 is illustrated by the arrow A430 in Fig. 3b. The primary pusher 430 is configured to push the primary stud 911 out from the primary bore 420 in the primary direction D410 into a stud hole 920.

In an embodiment, in order to orient the primary stud 911 relative to the tire tread 930, the device 100 comprises a primary rotator 110. The primary rotator 110 is configured to rotate the primary studding head 400 about an axis AX400 that is parallel to the primary direction D410. As indicated in Fig. 3b, the axis AX400 need not to penetrate the primary studding head 400. For example, the primary studding head 400 may be arranged, by using a rod 150, to such a location that the axis AX400 does not penetrate the primary studding head 400. For example, the primary studding head 400 may be arranged to such a location that the axis AX400 does not penetrate the primary mouth 410 of the primary studding head 400. However, in a preferable embodiment, the primary rotator 110 is configured to rotate the primary studding head 400 about an axis AX400 that is parallel to the primary direction D410 and penetrates the primary mouth 410. This has the effect that the rotation of the primary studding head 400 does not move the primary studding head 400 relative to the tread 930. This simplifies the process of moving the primary studding head onto a stud hole 920.

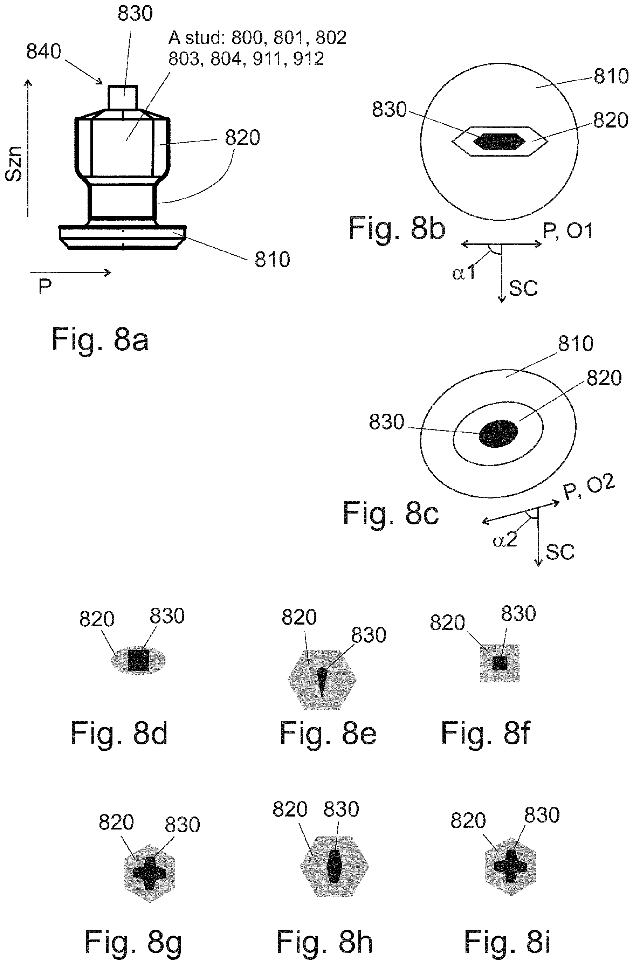

Herein orienting a primary stud 911 relative to the tire tread 930 means rotation of the stud 911 in such a way that a principal direction of the stud has a defined angle (α1, α2) with respect to the circumferential direction SC of the tire 900. To elaborate this issue, Fig. 8a shows in detail and in a side view an antiskid stud 800, such as a primary stud 911 or a secondary stud 912. An antiskid stud 800 comprises a base 810. The base 810 typically has a width and a length, both of which are more than a height of the base 810. The width and the length of the base 810 defines a longitudinal direction Szn for the stud 800, the longitudinal direction Szn being typically perpendicular to the width and the length of the base 810. The stud 800 comprises a body 820 extending in the longitudinal direction Szn from the base 810. Typically, the stud comprises a hard metal pin 830 arranged partly in the body 820. The tip 840 of the a hard metal pin 830 protrudes out from the stud body 820 and provides for grip e.g. on icy surface. The stud is injected into the stud hole 920 such that the base 810 is arranged in the stud hole and the tip 840 protrudes outwardly from the tread 930. However, the grip properties of a stud depend on the type of the stud. Moreover, the stud may have better grip in one direction than another. Thus, the orientation of the stud relative to the circular direction SC of the tire may affect the grip of the tire.

Referring to Figs. 8b and 8c, which show studs as seen from the longitudinal direction Szn of Fig. 8a, the cross section of the hard metal pin 830 and/or the stud body 820 and/or the base 810 is not necessarily circular. Therefore, the cross section of the hard metal pin 830 and/or the stud body 820 and/or the base 810 on a plane having a normal parallel to the longitudinal direction Szn of the stud 800 has a length in a principal direction P, the length being the greatest one-dimensional measure of the cross section. When the cross section is not circular, the length in the principal direction P is greater than a one-dimensional measure (e.g. width) in a direction that is not parallel with the principal direction P. Since the hard metal pin 830 is mainly responsible for the grip, in an embodiment, the cross section of the hard metal pin 830 on a plane having a normal parallel to the longitudinal direction Szn of the stud 800 has a length in the principal direction P, the length in the principal direction P being the greatest one-dimensional measure of the cross section. For example, in Fig. 8d, the diagonal of the square would define a principal direction P and a length of the stud. A one-dimensional measure in a direction forming an angle of 45 degrees with the principal direction would less than the length by a factor of √2. As evident, in Fig. 8d, the width, however, if measured perpendicular to the length, would equal the length.

The orientation (O1, O2) of a stud refers to an angle (α1, α2) between the principal direction (O1, O2) of the stud 800 and the circumferential direction of the tire SC, at the point of the stud 800. Such orientations O1, O2 and angles α1, α2 are indicated e.g. in Figs. 8b and 8c.

By orienting the stud 800 (e.g. primary stud 911) in such a way that the principal direction P of the stud 800 forms a proper pre-defined angle (α1, α2) with the circumferential direction of the tire SC, the grip properties of the tire 900 can be improved. In particular, a primary stud 911 may be oriented such that the principal direction P of the primary stud 911 forms a primary angle α1 with the circumferential direction of the tire SC and a secondary stud 912 may be oriented such that the principal direction P of the secondary stud 912 forms a secondary angle α2 with the circumferential direction of the tire SC, wherein the primary angle α1 is different from the secondary angle α2. Here also the circumferential direction SC may be oriented e.g. in the direction of rotation of the tire.

Figures 8d to 8i show, as seen from the longitudinal direction Szn of a stud 800, cross sections of stud bodies 820 and hard metal pins 830. The cross section of the hard metal pin 830 may be symmetrical about a plane having a normal parallel to the principal direction (e.g. Figs. 8b, 8c, 8d, and 8f) or it may be non-symmetrical about such a plane (e.g. Fig. 8e). In the former case it may suffice to consider the principal direction as undirected, i.e. either of the directions defined by the length, or any one of the directions defined by a length. In the latter case it may be important to consider the principal direction as being directed in only one of the directions defined by the length.

In an embodiment, in order to orient the primary stud 911 relative to the tire tread 930 to many different pre-defined orientations, the primary rotator 110 is configured to rotate the primary studding head 400 about the axis AX400 in a continuous manner. The primary rotator 110 may be configured to rotate the primary studding head 400 about the axis AX400 in a continuous manner up to a maximum angle. The rotator 110 is also configured to stop the rotation of the primary studding head 400 at any angle, optionally at any angle being at most the maximum angle. The maximum angle is preferably at least 30 degrees, at least 45 degrees, at least 90 degrees, or at least 180 degrees. Having a limited maximum turning angle has the effect that the feeding of the stud to the studding head 400 is easier to implement.

In an embodiment, the primary rotator 110 is configured to rotate the primary studding head 400 about the axis AX400 to a first direction of rotation R1 and to a second direction of rotation R2, wherein the a second direction of rotation R2 is reverse to the first direction of rotation R1. Such rotation may be continuous. Such rotation may be stoppable at any location. Thus, the primary rotator 110 may be configured to stop the rotation of the primary studding head 400 at a freely selectable position.

By rotation in both directions, a first stud can be oriented in a first orientation, thereafter a second stud can be oriented in a second orientation, and thereafter a third stud can be oriented in the first orientation (or some other third orientation). The same effect is achieved in an embodiment, wherein the primary rotator 110 is configured to rotate the primary studding head 400 about the axis AX400 only to a first direction of rotation R1 and by at least 360 degrees. However, in such an embodiment, e.g. the feeding of studs into the studding head may be hard. Therefore, preferably, the studding head 400 is configured to be rotated in two opposite directions of rotation R1, R2 by the rotator 110.

Moreover, it is typically faster to rotate the studding head 400 back and forth than in only on direction of rotation. In a preferable embodiment, the primary rotator 110 is configured to rotate the primary studding head 400 about the axis AX400 by at least 15 degrees both to a first direction of rotation R1 and to a second direction of rotation R2, wherein the a second direction of rotation R2 is reverse to the first direction of rotation R1 (see Fig. 3a). Furthermore, preferably the primary rotator 110 is configured to rotate the primary studding head 400 about the axis AX400 by at least 15 degrees to both directions of rotation R1 and R2 from a reference position. Moreover, after such a rotation, the primary rotator 110 is configured to rotate the primary studding head 400 back to the reference position. The reference position may be e.g. a central position, such as an orientation, in which the studs become injected in an orientation that is parallel to the circumferential direction SC. In an embodiment, the device 100 is configured to return the primary studding head 400 to the reference position after injecting a stud from the primary mouth 910. In addition, the device 100 may be configured to return the primary studding head 400 to the reference position before injecting a stud from the primary mouth 910, and thereafter, but before injecting a stud from the primary mouth 910, to turn the primary studding head 400 to correspond to the orientation of the stud that will be injected. However, in a preferred embodiment, the device 100 is configured to, at least at some point, to inject a first stud in a first orientation O1 and a subsequent second stud to a second, different, orientation O2 in such a way, that in between injecting the first stud and the second stud, the primary studding head is not in the reference position. In other words, preferably, the primary studding head 400 is rotated only as much as needed. In other words, preferably, the primary studding head 400 is rotated without unnecessary rotations back and forth.

More preferably, the primary rotator 110 is configured to rotate the primary studding head 400 about the axis AX400 by a turning angle, such as by at least 30, at least 45, at least 90, or at least 180 degrees both to the first direction of rotation R1 and to the second direction of rotation R2. For example, the primary rotator 110 may be configured to rotate the primary studding head 400 about the axis AX400 by the turning angle in the first direction of rotation R1 and after injecting the stud, to rotate the primary studding head 400 in the second direction of rotation R2 to return the studding head. Herein the turning angle refers to the angle that the studding head 400 turns, when turning from a first extreme to a second extreme. If there are no extremes for the turning, the turning angle is unlimited (as many rounds as imaginable).

Even more preferably, the primary rotator 110 is configured to rotate the primary studding head 400 about the axis AX400 by a portion of the turning angle both to the first direction of rotation R1 and to the second direction of rotation R2 from a reference position. For example, the rotator may be configured to rotate the primary studding head 400 about the axis AX400 by half of the turning angle in both the first direction R1 and the second direction R2 of rotation, and after injecting the stud, to rotate the primary studding head 400 in the second direction R2 or the first direction R1 of rotation to return the studding head.

Moreover, as indicated above, preferably the primary rotator 110 is configured to rotate the primary studding head 400 in a continuous manner. Moreover, as indicated above, preferably the primary rotator 110 is configured to rotate the primary studding head 400 in a continuous manner to both directions of rotation such that the rotation is stoppable at any angle; optionally within the limits of the turning angle.

As indicated above, if the primary rotator 110 is configured such that the turning angle is large (see above), feeding of stud may be difficult. However, it has been noticed that most studs are symmetric, whereby their grip and other properties are the same in a first orientation and in a reverse, second orientation (herein the second orientation is turned by 180 degrees about the longitudinal direction Szn relative to the first orientation). When such studs are used to stud a pneumatic tire, is suffices that the primary rotator 110 is configured to rotate the primary studding head 400 about the axis AX400 by 90 degrees in both the first direction R1 and the second direction R2 of rotation relative to a reference position (e.g. a central position). In this case, a turning angle between the extremes reachable by the primary studding head 400 would be 180 degrees.

In an embodiment, the device 100 comprises a studding tool 300 that comprises a body 310 and the primary studding head 400 (see Fig. 3a). The primary rotator 110 may be configured to rotate the primary studding head 400 about an axis AX400 that is parallel to the primary direction D410 relative to the body 310. The studding tool 300 may be movable, relative to the tire holder 210, in a direction that has a component in the transversal direction ST.

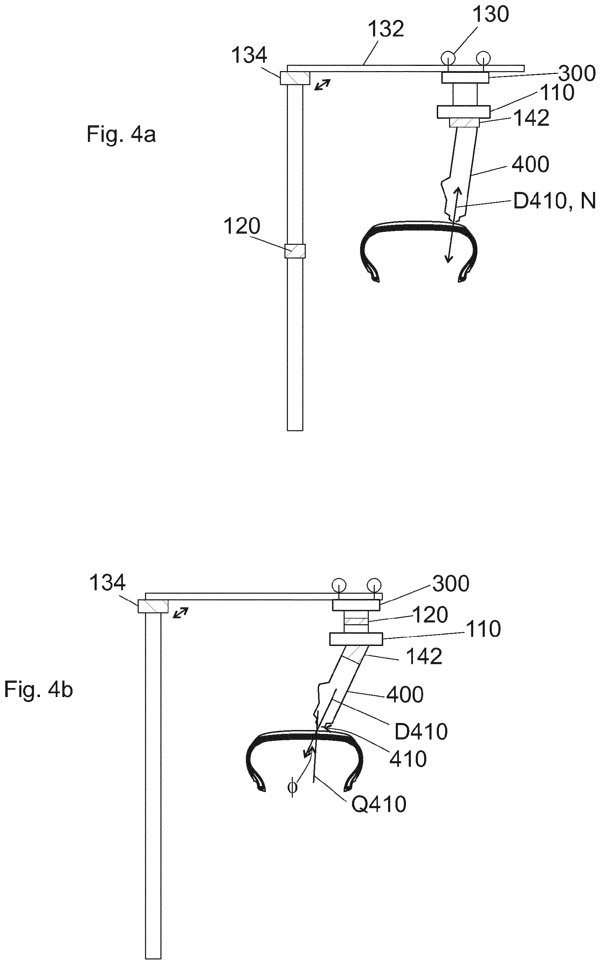

In an embodiment, the device 100 comprises a riser 120. The riser is configured to lift and lower the primary studding head 400 and/or the pneumatic tire 900 relative to each other. In Fig. 2, the riser 120 is configured to lift and lower the tire 900. In Figs. 4a and 4b a riser in configured to lift and lower the primary studding head 400.

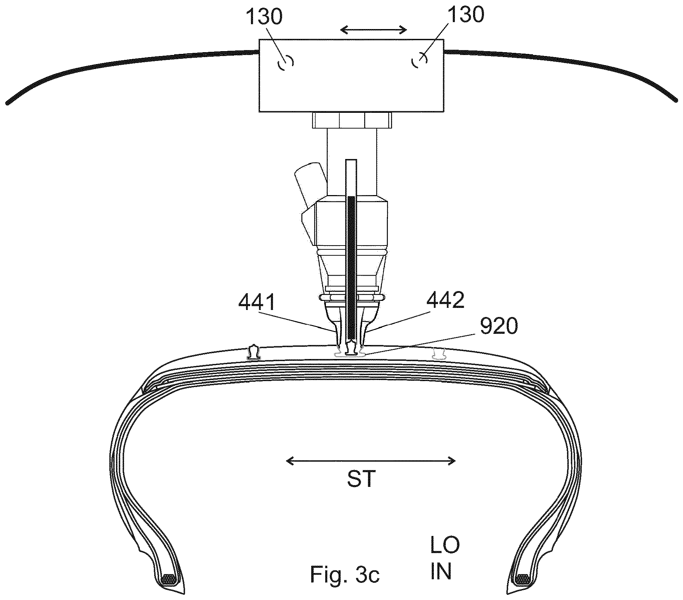

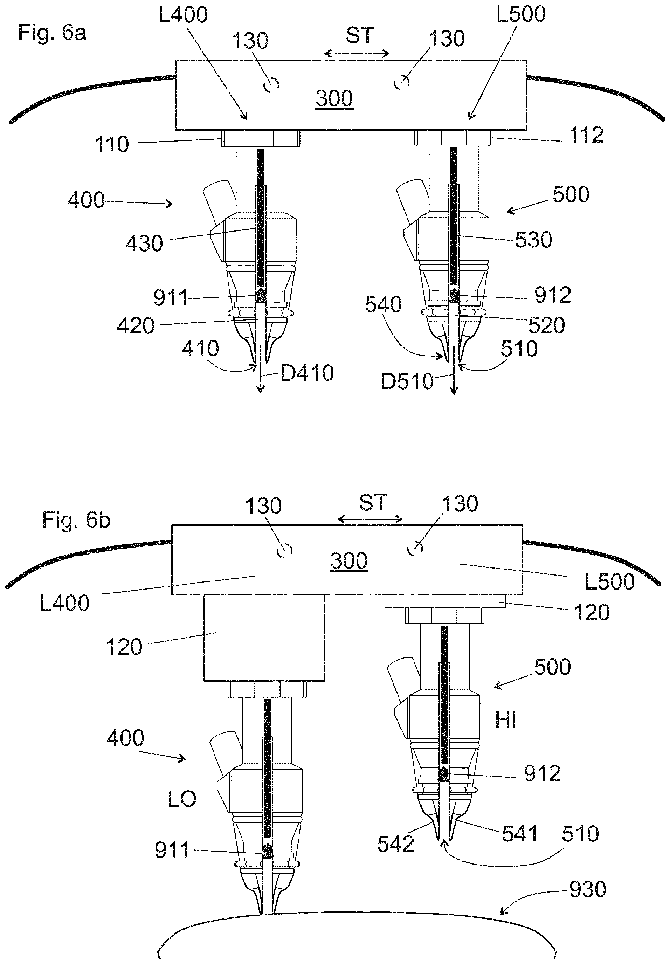

In this way, the primary studding head 400 is configured to be in a lifted position "HI" (see Figs. 2 and 6b for a secondary studding head 500) and a lowered position "LO" (see Figs. 3a, 3c, and 6b) relative to the tread 930 of the pneumatic tire 900. In the lowered position "LO", the device 100 is configured to inject a stud into a stud hole 920. Correspondingly, in the lifted position "HI", the device 100 is configured to move the tread 930 and/or the primary studding head 400 relative to each other in a direction that has at least a circumferential and/or a transversal component. Such movement is done after injecting a stud into a first stud hole 920, in order to focus the studding head 400 to a next stud hole 920. Typically, the tire 900 is configured to be rotated by the tire holder 210 in order to have the circumferential movement. Typically, the primary studding head 400 is movable in a direction that has a component in the transversal direction to have the transversal movement.

In an embodiment, the device 100 is configured to engage the primary pusher 430 only when the primary studding head 400 is in the lowered position LO. This has the effect that studs that are injected are injected to stud holes.

It has been found that if the riser 120 comprises an actuator that uses pressurized gas (e.g. pressurized air), the movement of the studding head 400 relative to the tread 930 is not well controlled. This is most likely dues to the compressibility of the gas. Thus, even if a cylinder is extended by pressurized gas, it may be contracted reasonably easily because of the compressibility of the gas. In such a case, the studding head 400 may be e.g. pressed too hard against the tread 930 in some locations and less hard in other locations. This results in uneven studding and may deteriorate the properties of the studded tire. It has also been found that when the riser 120 is free from an actuator that functions by pressurized gas, such problems can be avoided. Thus, in an embodiment, the riser 120 comprises a hydraulic actuator. A hydraulic actuator refers to an actuator configured to be operated by a liquid. As known, liquids are substantially incompressible, whereby the aforementioned problems related to gas can be avoided. In addition or alternatively, the riser 120 may comprise an electric actuator. Preferably, in addition, the riser 120 is free from an actuator that functions by pressurized gas.

Referring to Figs. 3a to 7b, in an embodiment, device 100 comprises a first actuator 130 configured to move the primary studding head 400 and/or the pneumatic tire 900 relative to each other in a direction that has a non-zero component in the transversal direction ST. This has the effect that the studding head 400 (or studding heads 400, 500) can be moved with respect to the tire tread 930 in the transversal direction, whereby the studding head 400 can be used to inject stud at various location on the tread 930. Typically, the circumferential movement is implemented by rotating the tire 900, as indicated above. In an embodiment, the first actuator 130 is configured to move the studding tool 300 that comprises the primary studding head 400. In an embodiment, the first actuator 130 is configured to move the studding tool 300 and/or the pneumatic tire 900 relative to each other in a direction that is substantially parallel to the axial direction AX. In an embodiment, the first actuator 130 is configured to move the primary studding head 400 in a direction that is substantially parallel to the axial direction AX. Herein the term substantially means a direction that is parallel to the axial direction AX or forms an angle of at most 15 degrees with the axial direction.

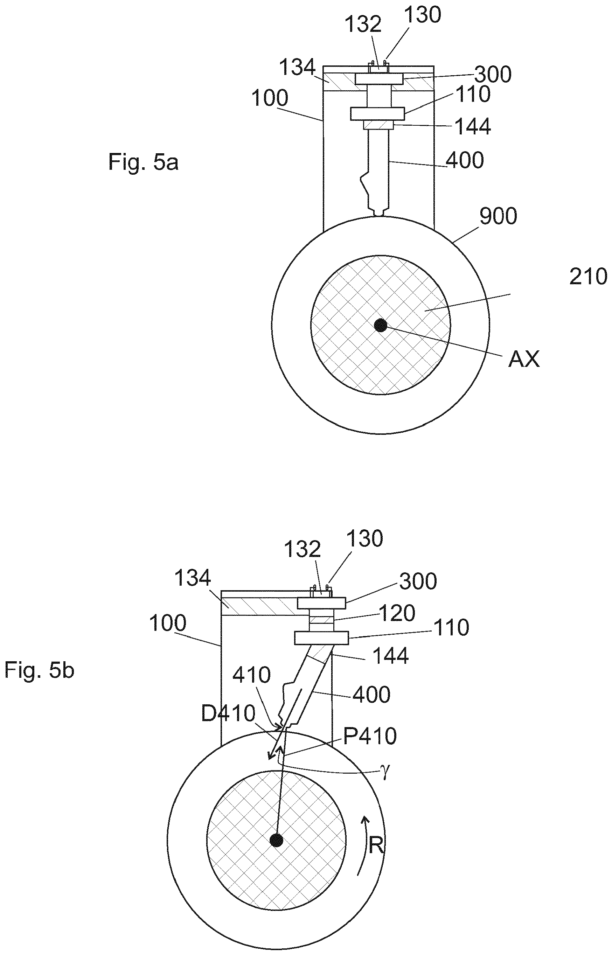

Moreover, as indicated in Figs. 4a, 5a and 5b, in an embodiment, the device 100 comprises a second actuator 134 configured to move the studding tool 300 (or at least the primary studding head 400) relative to the tread 930 in a direction that is parallel to a circumferential direction SC (i.e. perpendicular to the axial direction AX). The circumferential direction may be e.g. horizontal. For example, the studding tool 300 may be movably connected to a rod 132, and configured to be moved in the longitudinal direction of the rod 132 by the first actuator 130. However, a second actuator 134 may be configured to move the rod 132 in a direction that is transverse to the axial direction AX; e.g. transverse to the longitudinal direction of the rod 132.

Referring to Figs. 4a and 4b, in an embodiment, the device 100 comprises a first tilt 142. The first tilt 142 may be used to pivot the primary studding head 400. The first tilt 142 may be configured to pivot the primary studding head 400 in such a way that the primary direction D410, to which the primary stud 911 is injected, is substantially parallel to a normal of the tread 930, as indicated in Fig. 4a. For example, an angle between a normal N of the tread (see Figs. 4a and 6a) and the primary direction D410 may be less than 10 degrees or more than 170 degrees. The angle here refers to a smaller of the two possibilities, and is therefore at most 180 degrees.

However, in some cases it may be beneficial that the stud 911 becomes arranged at an angle relative to the normal N of the tread 930. Therefore, in an embodiment, the first tilt 142 is configured to turn (i.e. pivot) the primary studding head 400 in such a way that the primary direction D410 forms an angle φ relative to a plane Q410 defined by the location of the primary mouth 410, a normal N of the tread 930, and a circumferential direction SC of the tread 930. Here, both the normal N and the circumferential direction SC are defined at the location of the primary mouth 410. The angle φ may be e.g. at least 5 degrees, at least 10 degrees, at least 15 degrees, or at least 20 degrees. In this way, the longitudinal direction Szn of the stud becomes tilted in a transverse direction ST, which may increase the grip of the studded tire in the transversal direction.

Referring to Figs. 5a and 5b, in an embodiment, the device 100 comprises a second tilt 144. The second tilt 144 may be used to pivot the primary studding head 400. The second tilt 144 may be configured to turn (i.e. pivot) the primary studding head 400 in such a way that the primary direction D410, to which the primary stud 911 is injected is substantially parallel to a normal of the tread 930. For example, an angle between a normal N of the tread (see Fig. 6a) and the primary direction D410 may be less than 10 degrees or more than 180 degrees. Also here, the angle refers to a smaller of the two possibilities, and is therefore at most 180 degrees.

However, in some cases it may be beneficial that the stud 911 becomes arranged at an angle relative to the normal N of the tread 930. Therefore, in an embodiment, the second tilt 144 is configured to turn the primary studding head 400 in such a way that the primary direction D410 forms an angle γ relative to a plane P410 defined by the axis of rotation AX of the tire 900 and the location of the primary mouth 410. The angle γ may be e.g. at least 5 degrees, at least 10 degrees, at least 15 degrees, or at least 20 degrees. In this way, the longitudinal direction Szn of the stud becomes tilted forward or backward, which may increase the grip of the studded tire under acceleration and/or deceleration.

In an embodiment, the device 100 comprises a tilt arrangement comprising both a first tilt 142 and a second tilt 144.

Referring to Figs. 3a and 3b, preferably the primary studding head 400 comprises a number of primary jaws 440, such as the jaws 441 and 442. The primary jaws are arranged laterally around the primary mouth 410. The primary jaws are movable laterally to an open position "IN" (see Fig. 3c) and to a closed position "OUT" (see Fig. 3a). The operation of the primary jaws is such that when they are in the closed position "OUT" they may be moved at least partially into a stud hole 920, as indicated in Fig. 3a. A stud 911 is injected, e.g. by means of the primary pusher 430, through the primary mouth 410 between the primary jaws 440 to the stud hole 920. When the stud 911 is injected into the stud hole, the stud 911 and/or the pusher 430 opens the jaws 440 to the open position "IN". Referring to Fig. 3c, when the jaws are in a stud hole and the jaws are moved to the open position "IN", the jaws spread the stud hole 920 in such a way that also the stud having a base 810 can be easily moved to the stud hole 920. Thereafter, the jaws 440 can be pulled out from the stud hole 920. When the jaws 440 are pulled out from the stud hole, the stud hole contracts, whereby the stud remains in the stud hole 920 in the desired orientation. The jaws 440 are moved back to the closed position "OUT" again e.g. by pulling the pusher 430 out from being in between the jaws 440 (see Figs. 3a and 3c).

The primary studding head 400 may comprise e.g. at least three primary jaws 440 laterally surrounding the primary mouth 410.Typically three or four primary jaws are sufficient for precise handling of a stud.

The device 100 can be used to drive a first primary stud 911 into the tire 900 (i.e. a first stud hole 920) in a first primary orientation. Thereafter the primary rotator 110 can be used to rotate the primary studding head 400 about the axis AX400. Thereafter, the primary studding head 400 may be used to drive a second primary stud 911 into the tire (i.e. a second stud hole 920) in a second primary orientation. Herein the first primary orientation is different from the second primary orientation. Examples of a primary orientation O1 (i.e. a primary angle α1 relative to SC) and a secondary orientation O2 (i.e. a secondary angle α2 relative to SC) are shown in Figs. 8b and 8c.

Referring to Figs 6a to 7b, in an embodiment, the device 100 further comprises a secondary studding head 500. The secondary studding head 500 comprises a secondary mouth 510 configured to inject a secondary stud 912 out of the secondary studding head 500 into one of the stud holes 920 of the pneumatic tire 900. The primary studding head 400 is configured to inject a primary stud 911 to one of the stud holes 920 and the secondary studding head 500 is configured to inject a secondary stud 912 into another one of the stud holes 920. The secondary studding head 500 is configured to inject a secondary stud 912 into the hole 920 in a secondary direction D510. The secondary studding head 500 comprises a secondary bore 520 configured to guide the secondary stud 912. The secondary bore 520 ends at the secondary mouth 510. The secondary studding head 500 comprises a secondary pusher 530 movable in said secondary bore 520 for pushing the secondary stud 912 out from the secondary bore 520 in the secondary direction D510.

Referring to Figs. 6a to 7b, in an embodiment, the device 100 comprises a studding tool 300, and the studding tool 300 comprises the primary studding head 400 and the secondary studding head 500. Furthermore, in an embodiment, a first actuator 130 (such as the aforementioned first actuator 130) is configured to move the studding tool 300 and/or the tire holder 210 relative to each other at least in a direction that has a non-zero component in the transversal direction ST.

In an embodiment, the first actuator 130 is configured to move the studding tool 300 relative a surface, on which the device 100 stands, at least in a direction that has a non-zero component in the axial direction AX. The surface may be e.g. a surface of a floor. In such an embodiment, the movement of both the studding heads 400, 500 is realized by the same actuator(s), since both the studding heads are move by moving the studding tool 300. This simplifies the construction of the studding device 100.

It has been found, that when a studding tool (400, 500) is arranged in the lowered position ("LO"), as in Figs. 6b and 3a, the studding head (400 or 500) typically presses the tread 930 thereby deforming it. Thus, it has been observed, that if both the studding heads 400, 500 were simultaneously in the lowered position, both the studding heads would deform the tread 930. However, in such a case, the shape of the tread to be studded would not correspond the shape of the tread 930 as designed or optically measured. Thus, if both the heads 400, 500 were simultaneously used, one or both of the studs could become aligned in the stud holes 920 incorrectly. Therefore, in an embodiment, the device 100 is configured not to inject two studs at the same time.

In an embodiment, the device 100 is configured to engage the primary pusher 430 at a first instance of time t1 and engage the secondary pusher 530 at a second instance of time t2 such that the absolute time difference |t2-t1| between the first instance of time t1 and the second instance of time t2 is always at least 0.1 s. The term "always" means that no such pairs of instances can be found, wherein the absolute time difference |t2-t1| would be less than 0.1 s. More specifically, in an embodiment, the device 100 is configured to engage the primary pusher 430 at multiple first instances i of time t1,i and engage the secondary pusher 530 at multiple second instances j of time t2,j such that the absolute time difference |t2,j-t1,i| for all pairs (i,j) of first and second instances of time is at least 0.1 s. Thus, the minimum of the absolute differences |t2,j-t1,i| is at least 0.1 s for all the instances j and i.

Referring to Fig. 6b, in an embodiment, the device 100 comprises a riser arrangement 120 configured to [A] lift and lower the primary studding head 400 and/or the pneumatic tire 900 relative to each other and [B] lift and lower the secondary studding head 500 and/or the pneumatic tire 900 relative to each other. In this way, the primary studding head 400 is configured to be in a lifted position HI and a lowered position LO; and the secondary studding head 500 is configured to be in a lifted position HI and a lowered position LO. Herein the lifted and lowered positions refers to the positions relative to the tread 930 of the tire. For example, in Fig. 6b, the primary studding head 400 is in the lowered position LO and the secondary studding hear 500 is in the lifted position HI.

In an embodiment, the device 100 is configured in such a way that at a time at most one of the primary studding head 400 and the secondary studding head 500 is in the lowered position LO. Naturally, both the studding heads 400, 500 may be simultaneously in the lifted position HI. However, if both the studding heads 400, 500 were simultaneously in the lowered position, the tread 930 of the tire 900 could be deformed in an uncontrolled manner, as indicated above, which could result in stud alignment problems; at least if the two studding heads 400, 500 are comprised by the same studding tool 300, whereby they are physically close to each other.

In an embodiment, the device 100 is configured to engage the primary pusher 430 only when the primary studding head 400 is in the lowered position LO and engage the secondary pusher 530 only when the secondary studding head 500 is in the lowered position LO.

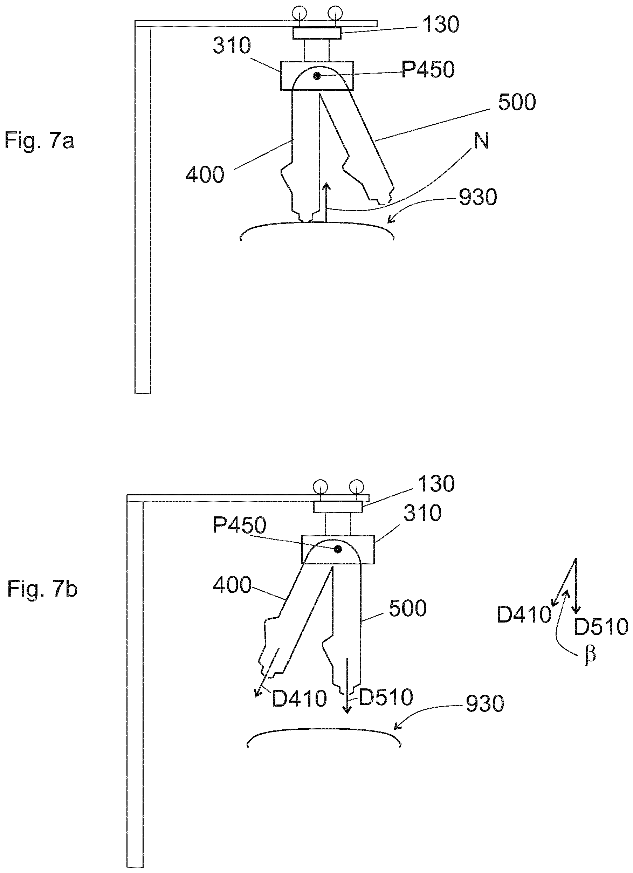

Referring to Figs. 6a and 7a, in an embodiment, the primary studding head 400 is fixed to the studding tool 300 at a primary location L400 and the secondary studding head 500 is fixed to the studding tool 300 at a secondary location L500. Moreover, in an embodiment, the distance between the primary location L400 and the secondary location L500 is constant over time. This has the effect that the device can be kept simple, since only one actuator, i.e. the first actuator 130, is needed to move both the studding heads 400, 500.

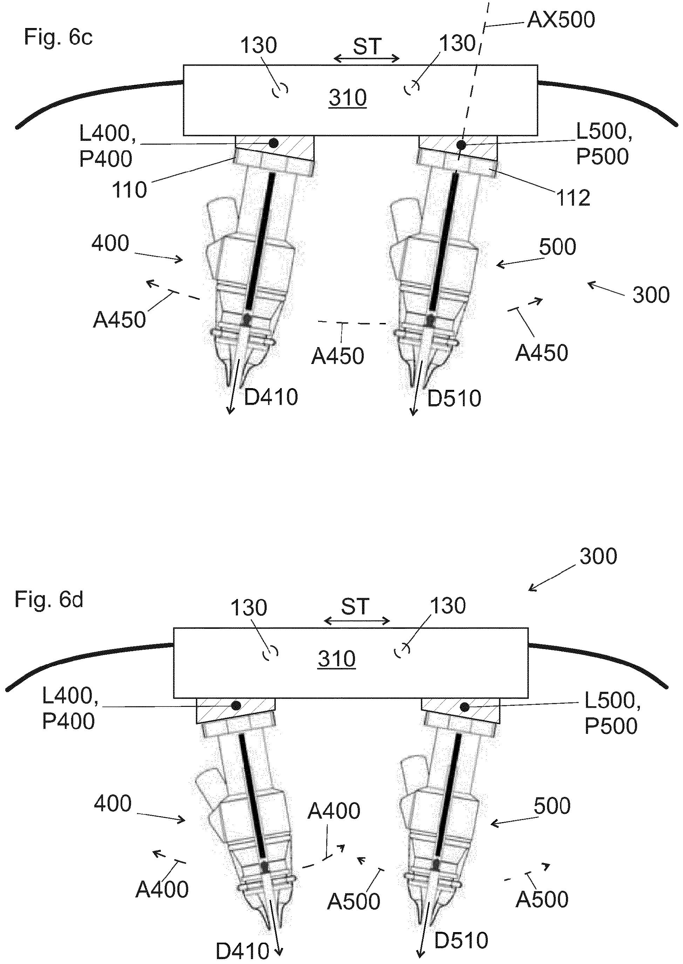

Referring to Figs. 6c and 6d, in an embodiment, the studding tool 300 comprises a body 310, to which the primary studding head 400 and the secondary studding head 500 are fixed. In an embodiment, the primary studding head 400 is configured to turn about a primary pivot P400 relative to the body 310 of the studding tool 300. In an embodiment, the secondary studding head 500 is configured to turn about a secondary pivot P500 relative to the body 310 of the studding tool 300. Referring to Figs. 6c and 6c, the primary pivot P400 is arranged a distance apart from the secondary pivot P500.

Referring to Fig 6d, in an embodiment, the secondary studding head 500 is configured to turn about the secondary pivot P500 irrespective of the turning of the primary studding head 400 about the primary pivot P400. This is illustrated by the two separate arrows A400 and A500. In this way, an angle between the secondary direction D510 and the primary direction D410 is configured to vary in use. However, referring to Fig. 6c, in an embodiment, the secondary studding head 500 is configured to turn about the secondary pivot P500 and the primary studding head 400 is configured to turn about the primary pivot P400 only in such way that an angle β (see Fig. 7b) between the secondary direction D510 and the primary direction D410 is constant. The angle may be e.g. zero, as indicated in Fig. 6c. The simultaneous and identical pivoting of the primary and secondary studding heads 400, 500 is indicated by the arrow A450 in Fig. 6c.

In the embodiments of Figs. 6c and 6d, the studding heads 400, 500 are pivotable about axes (two axes) that form an angle with a radial direction of the tire. In the embodiments of Figs. 6c and 6d, the studding heads 400, 500 are pivotable about axes (two axes) that (both) are substantially perpendicular to a radial direction of the tire. The radial direction refers to the radial direction that is directed from the axis of rotation of the tire towards the corresponding pivot (P400 for the primary studding head 400 and P500 for the secondary studding head 500).

Figs. 7a and 7b indicate an embodiment, wherein the secondary studding head 500 and the primary studding head 400 are configured to turn about a common pivot P450. In this way, the common pivot P450 serves as both the primary pivot P400 and the secondary pivot P500. However, in the embodiment of Figs. 7a and 7b, the primary and secondary pivots P400, P500 are arranged at the same location and in the same direction, as indicated by the common pivot P450.

As indicated in Figs. 7a and 7b, the secondary studding head 500 is configured to turn about the common pivot P450 and the primary studding head 400 is configured to turn about the common pivot P450 only in such way that an angle β (see Fig. 7b) between the secondary direction D510 and the primary direction D410 is constant. The angle may be e.g. non-zero, as indicated in Fig. 7b. Preferably, the angle β is at least two degrees, such as at least 5 degrees or at least 10 degrees. This has the technical effect that the studding head 400, 500 to be used at a time can be simply selected by pivoting the studding heads 400, 500 about the common pivot 450 in such a way that that the studding head 400, 500 to be used points towards a stud hole 920. Moreover, the second studding head 500 may be rigidly fixed to the first studding head 400, whereby the angle β remains constant. As indicated in Figs. 7a and 7b, in an embodiment, the primary direction 410 forms a non-zero angle β with the secondary direction 510, wherein the non-zero angle β is constant over time and the non-zero angle β is at least two degrees.

In the embodiment of Figs. 6c, 7a, and 7b, the primary studding head 400 and the secondary studding head 500 are pivotable simultaneously such that the angle β between the primary direction D410 and the secondary direction D510 is constant over time (optionally the angle is zero). Moreover, in an embodiment, the device 100 is configured in such a way that at a first instance of time, the primary direction D410 is substantially parallel or substantially reverse to a normal N of the tread 930 of the tire 900, and at a second instance of time, the secondary direction D510 is substantially parallel or substantially reverse to a normal N of the tread 930 of the tire 900. As above, the term substantially parallel or reverse refers to an angle of less than 10 degrees or more than 170 degrees. In such an embodiment, both the studding heads 400, 500 can be used to inject studs in such a way that the longitudinal direction Szn of the stud becomes substantially parallel to a normal of the tread 930. However, as indicated above, by using a tilt arrangement (142, 144) a stud may be injected also in another direction. Moreover, the common pivot P450 can be used as the tilt arrangement (142, 144).

In the embodiments of Figs. 7a and 7b, the studding heads 400, 500 are pivotable about a common axis that forms an angle with a radial direction of the tire. In the embodiments of Figs. 7a and 7b, the studding heads 400, 500 are pivotable about a common axis that is substantially perpendicular to a radial direction of the tire. The radial direction refers to the radial direction that is directed from the axis of rotation of the tire towards the common pivot P450.

The device 100 preferably comprises two studding heads 400, 500. For example, the primary studding head 400 may be used to drive a stud of first type into the tire 900 in a first orientation O1. As for interpretation of the term orientation in connection with a stud, the reader is referred to what has been said above and to Figs. 8a - 8i. Moreover, the secondary studding head 500 may be used to drive a stud of a second type into the tire 900 in a second orientation O2. The first type may be different from the second type. For example, the first stud, injected to the tire by the primary studding head 400, may be of any one of the types indicated in Figs. 8b to 8i. For example, the second stud, injected to the tire by the secondary studding head 500, may be of any one of the type indicated in Figs. 8b to 8i, optionally different from the type of the first stud. In addition or alternatively, the first stud, injected to the tire by the primary studding head 400, may be injected in a first orientation O1, and the second stud, injected to the tire by the secondary studding head 500, may be injected in second orientation O2, the second orientation being different or the same as the first orientation. Typically at least one of the orientation and the type of the stud injected by the secondary studding head 500 is different from the orientation and/or the type of the stud injected by the primary studding head 400.

In an embodiment, the primary studding head 400 is configured to drive a primary stud 911 into the tire 900 in a primary orientation O1 and the secondary studding head 500 is configured to drive a secondary stud 912 into the tire 900 in a secondary orientation O2. Moreover, in an embodiment, the type of the primary stud 911 is different from the type of the secondary stud 912 and/or the orientation of the primary stud 911 is different from the orientation of the secondary stud 912. However, the different orientation can be realized with the primary rotator 110, as indicated above (and/or a secondary rotator 112 as will be discussed). Thus, in an embodiment, the type of the primary stud 911 is different from the type of the secondary stud 912.

In addition, the device 100 may comprise a primary rotator 110 as discussed above, even if the device 100 comprises a secondary studding head 500. In addition or alternatively, when the device 100 comprises a secondary studding head 500, the device may comprise a secondary rotator 112. The secondary rotator 112 may be configured to rotate the secondary studding head 500 about an axis AX500 that is parallel to the secondary direction D510 (see Fig. 6c). As indicated in Fig. 6c, the axis AX500 may penetrate the secondary studding head 500. In an embodiment, the secondary rotator 112 is configured to rotate the secondary studding head 500 about an axis AX500 that is parallel to the secondary direction D510 and penetrates the secondary mouth 510. However, with reference to Fig. 3b, the axis AX500 need not to penetrate the secondary studding head 500. For example the secondary studding head 500 could be fixed to a rod, in a manner similar to how the primary studding head 400 is fixed to the rod 150 in Fig. 3b.

As indicated above, when the stud is symmetric, it suffices that the angle between the extremes of the primary studding head 400 is 180 degrees. It is also noted, that when the stud is not symmetric, a such a small angle suffices, if two rotatable studding heads 400, 500 are used. For example when such studs are used to stud a pneumatic tire, and the primary rotator 110 is configured to rotate the primary studding head 400 about the axis AX400 by 90 degrees in both the first direction R1 and the second direction R2 of rotation relative to a reference position (e.g. a central position), it suffices that the secondary rotator 112 is configured to rotate the secondary studding head 500 about the axis AX500 by 90 degrees in both the first direction R1 and the second direction R2 of rotation relative to a reference position (e.g. a central position). In this case, the turning angles of both the studding heads 400, 500 would be 180 degrees. The non-symmetric studs can be fed into the primary studding head 400 is a first orientation (relative to the aforementioned reference position for the primary studding head) and into the secondary studding head 500 in a second orientation (relative to the aforementioned reference position for the studding studding head) that is reverse to the first orientation. Thus, a first half circle of orientations (relative to the circumferential direction of the tire) can be covered with the primary studding head 400 and a second half circle of orientations (relative to the circumferential direction of the tire) can be covered with the secondary studding head 500.

Referring to Figs. 6a and 6b, in an embodiment, the secondary studding head 500 comprises a number of secondary jaws 540, 541, 542 located laterally around the secondary mouth 510. The secondary jaws are movable to an open position ("IN", compare to Fig. 3c) and closed position ("OUT", compare to Fig. 3a) in a similar manner that has been discussed in connection with the primary jaws of the primary studding head 400. Preferably, the secondary studding head 500 comprises at least three secondary jaws 540, 541, 542, such as only three secondary jaws 540, 541, 542 or only four secondary jaws 540, 541, 542. As for the operation of the secondary jaws 540 during studding we refer to what has been said about the operation of primary jaws 440 during studding.

The device having two studding heads 400, 500 may be used such that the primary studding head 400 is used to drive a primary stud 911 of a first type into the tire in a primary orientation and thereafter the secondary studding head 500 is used to drive a secondary stud 912 of a second type into the tire in a secondary orientation. Preferably, the type of the primary stud 911 is different from the type of the secondary stud 912 and/or the orientation of the primary stud 911 is different from the orientation of the secondary stud 912. It is now also noted that one or both of the studs may have only circular cross-sections, whereby any direction can be considered to be the principal direction P. In such a case, however, the type of the studs may be different. For example, the size of the studs having the circular cross sections may be different. For example, smaller studs can be injected with the primary studding head 400 and larger studs can be injected with the secondary studding head 500.

Even if not shown in the figures, a device 100 may comprise a third (i.e. tertiary) studding head. The third studding head could be fixed to the body 310 of the studding tool 300 comprising the primary and secondary studding heads. The third studding head could be used e.g. to inject tertiary studs to the tire. The type of the tertiary studs could be different from the type of the secondary of the primary studs. In addition or alternatively, the orientation of the tertiary studs could be different from the orientation of the secondary or the primary studs. Moreover, the device 100 may comprise further studding head(s), optionally fixed to the body 310 of the studding tool 300.

In an embodiment, the device 100 comprises an imaging apparatus configured to optically detect the locations of the stud holes 920. Moreover, the device may comprise a memory unit configured to store information indicative of the locations of the stud holes 920 of the tire 900. Furthermore, the device 100 may comprise a control unit configured to move a studding head (400, 500) and/or rotate the tire holder 210 (and thus also a tire 900) by using the information indicative of the locations of the stud holes 920 of the tire 900 such that a studding head is arranged in the vicinity of a stud hole, e.g. on a stud hole 920. The imaging means may comprise e.g. a laser scanning apparatus. In addition or alternatively the imaging means may comprise e.g. a camera. The imaging means may be based on known machine-vision solutions. The imaging means may be configured to provide imaging-based data for guidance of the studding head(s) (400, 500) and/or the tire holder. The device 100 may comprise a control unit configured to control the movements of the studding head 400 or studding heads 400, 500 relative to the tread of the tire by using said imaging-based data.

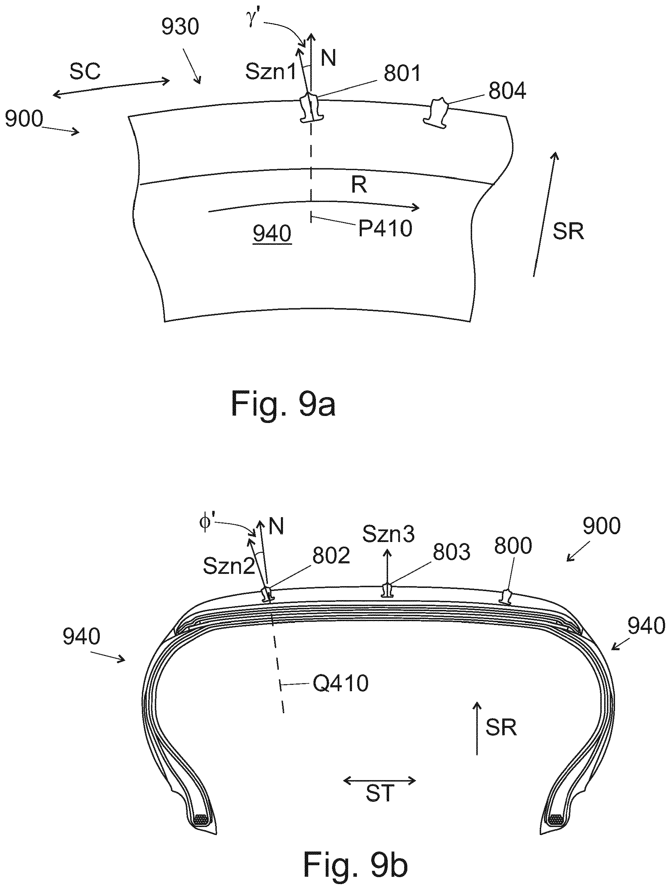

Referring to Figs. 9a and 9b, some embodiments of the device 100 can be used to inject studs into a tread 930 at various angles. Figure 9a shows, as an example, a tire 900 having a first stud 801, of which longitudinal direction Szn1 is tilted in the backward direction. The tire 900 of Fig. 9a corresponds to a tire studded as shown in Fig. 5b. The first stud 801 extends in its longitudinal direction Szn1. Moreover, the tip 840 thereof (see Fig. 8a) protrudes from the tread 930 in the same longitudinal direction Szn1. As discussed above, the longitudinal direction Szn1 of the first stud 801 forms first angle y' with a first plane P410 defined by the location of the first stud 801 and the axis AX of rotation of the pneumatic tire 900. Here the first angle y' is different from angle γ of Fig. 5b, since the longitudinal direction Szn1 of the stud 810 Szn1 is reverse to the direction D410 in which the stud was injected to the tread 930. In an embodiment, the first angle y' is at least 5 degrees, such as at least 10 degrees, at least 15 degrees, or at least 20 degrees.

Typically, a tire 900 is configured to rotate about the axis AX of rotation in a direction of rotation of the tire R. Typically, the tire 900 comprises a marking indicative of the direction of rotation of the tire. Such a marking may be provided e.g. on a sidewall 940 of the tire 900. Preferably, as indicated in Fig. 9a, the first angle y' opens, as seen from the first plane P410, to a direction that is reverse to the direction of rotation of the tire R. For example, considering the first angle y' to be formed about the axis of rotation AX such that the direction of rotation of the tire R is positive, the first angle y' is preferably negative. This has the effect that the first stud 801 bites firmly to underlying surface in particular during breaking. The fist stud (or some other studs) could be tilted forward, in order to increase grip during acceleration. As indicated by the reference numeral 804 in Fig. 9a, a tire 900 may comprise a stud 804 (or studs) tilted forwards and a stud 801 (or studs) tilted backward.

Even if not shown in the Figures, a pneumatic tire may comprise multiple studs, e.g. at least three studs, tilted backward, as defined in detail above and in Fig 9a for the stud 801. Even if not shown in the Figures, a pneumatic tire may comprise multiple studs, e.g. at least three studs, tilted forward, as defined in detail above and in Fig 9a for the stud 804. Even if not shown in the Figures, a pneumatic tire may comprise multiple studs, e.g. at least three studs, tilted forward, as defined in detail above and in Fig 9a for the stud 804, and in addition, multiple studs, e.g. at least three studs, tilted backward, as defined in detail above and in Fig 9a for the stud 801.

Figure 9b shows, as an example, a tire 900 having a second stud 802, of which longitudinal direction Szn2 is tilted in a transversal direction. Such a stud 802 corresponds to a stud injected as shown in Fig. 4b. The tire 900 of Fig. 9b comprises a second stud 802. The second stud 802 extends in a longitudinal direction Szn2 of the second stud 802. Moreover, the tip 840 of the second stud 802 protrudes from the tread 930 in the longitudinal direction Szn2 of the second stud 802. In Fig, 9b, the second stud 802 is tilted in a transversal direction ST such that the longitudinal direction Szn2 of the second stud 802 forms a second angle φ' with a second plane Q410 defined by the location of the second stud 802, a normal N of the tread 930 and a circumferential direction SC of the tire 900. Herein the normal N of the tread and the circumferential direction SC are defined at the location of the second stud 802. Equally well, the first stud 801 could be tilted also in a transversal direction and could have also a similar second angle φ'.

The second angle φ' may be at least 5 degrees, such as at least 10 degrees, at least 15 degrees, or at least 20 degrees. Preferably, the second angle φ' opens, as seen from the second plane Q410 towards that sidewall 940 of the two sidewalls 940 of the pneumatic tire 940 that is closer to the intersection of the second plane Q410 and the tread 930 of the tire 900. In the Fig. 9b, the sidewall of the two sidewalls 940 of the pneumatic tire 940 that is closer to the intersection of the second plane Q410 and the tread 930 of the tire 900 is on the left hand side. Also herein, the longitudinal direction (Szn1, Szn2) of the stud (801, 801) is directed outwards from the tread 930. This has the effect that the transversal grip of the tire 900 is improved. However, in some cases the transversal grip can be improved by tilting, in the transverse direction, the stud to the other direction (not shown in Fig. 9b).

The second stud 802 needs not to be tilted in the circumferential direction SC. In such a case, the longitudinal direction Szn2 of the second stud 802 belongs to a plane P410 defined by the location of the second stud 802 and the axis AX of rotation of the pneumatic tire 900. However, the second stud 802 may be tilted in the circumferential direction SC.

The first stud 801 needs not to be tilted in the transversal direction ST. In such a case the longitudinal direction Szn1 of the first stud 801 belongs to a plane Q410 defined by the location of the first stud 801, a normal N of the tread 930 and a circumferential direction SC of the tire 900. Herein the normal N of the tread and the circumferential direction SC are defined at the location of the first stud 801.

In addition, the pneumatic tire 900 may comprise a further stud 803, of which longitudinal direction Szn3 may be is substantially parallel to the normal N of the tread 930 at the location of the further stud 803. Such a stud is shown in Fig. 9b. The longitudinal direction Szn3 of the further stud 803 be parallel to the normal N or form an angle of at most 10 degrees or at most 5 degrees with the normal N of the tread 930. Also here, the normal N of the tread is defined at the location of the further stud 803.

The following examples illustrate some embodiments of the device 100 for studding a pneumatic tire 900, use of the device 100, and a at least partly studded pneumatic tire 900. Such a tire 900 may have been studded e.g. by a device 100 as disclosed above.

### Examples

101. A device (100) for driving antiskid studs (800, 911) into stud holes (920) of a tread (930) of a pneumatic tire (900), the device (100) comprising
   - a tire holder (210) for holding the pneumatic tire (900) to be studded, the tire holder (210) defining an axial direction (AX) that is parallel to an axis of rotation (AX) of the pneumatic tire (900) configured to be held by the tire holder (210),
   - a primary studding head (400) comprising
      - a primary mouth (410) for injecting a primary stud (911) out of the primary studding head (400) into one of the stud holes (920) of the pneumatic tire (900) in a primary direction (D410),
      - a primary bore (420) for guiding the primary stud (911), the primary bore (420) ending at the primary mouth (410), and
      - a primary pusher (430) movable in said primary bore (420) for pushing the primary stud (911) out from the primary bore (420) in the primary direction (D410),
      **characterized** in that
   - the device (100) comprises a primary rotator (110) configured to rotate the primary studding head (400) about an axis (AX400) that is parallel to the primary direction (D410).
102. The device (100) of the example 101, wherein
   - the primary rotator (110) configured to rotate the primary studding head (400) about the axis (AX400) in a continuous manner;
      preferably
   - the primary rotator (110) is configured to
      - rotate the primary studding head (400) about the axis (AX400) in a continuous manner and
      - stop the rotation of the primary studding head (400) at a freely selectable position.
103. The device (100) of the example 101 or 102, wherein
   - the primary rotator (110) is configured to rotate the primary studding head (400) about the axis (AX400) to a first direction of rotation (R1) and to a second direction of rotation (R2), wherein the a second direction of rotation (R2) is reverse to the first direction of rotation (R1) in such a way that a turning angle between the extremes reachable by the primary studding head (400) is at least 30 degrees; such as at least 45 degrees or least 90 degrees; preferably,
   - the turning angle between the extremes reachable by the primary studding head (400) is at most 720 degrees, such as at most 360 degrees or at most 180 degrees;
      most preferably,
   - the turning angle is from 90 degrees to 180 degrees.
104. The device (100) of any of the examples 101 to 103, wherein
   - the primary rotator (110) is configured to rotate the primary studding head (400) about the axis (AX400) both to a first direction of rotation (R1) and to a second direction of rotation (R2) relative to a reference position, wherein the second direction of rotation (R2) is reverse to the first direction of rotation (R1);
      preferably
   - the device (100) is configured to rotate the primary studding head (400) without unnecessary rotations back and forth.
105. The device (100) of any of the examples 101 to 104, comprising
   - a riser (120) configured to lift and lower the primary studding head (400) and/or the pneumatic tire (900) relative to each other, whereby
   - the primary studding head (400) is configured to be in a lifted position (HI) and a lowered position (LO) relative to the tread (930) of the pneumatic tire (900);
      preferably
   - the device (100) is configured to engage the primary pusher (430) only when the primary studding head (400) is in the lowered position (LO).
106. The device (100) of example 105, wherein
   - the riser (120) comprises a hydraulic and/or an electric actuator;
      optionally,
   - the riser (120) is free from an actuator that works by pressurized gas.
107. The device (100) of any of the examples 101 to 106, comprising
   - a first actuator (130) configured to move the primary studding head (400) and/or the pneumatic tire (900) relative to each other in a direction that has a non-zero component in the axial direction (ST);
      for example,
   - the first actuator (130) is configured to move the primary studding head (400) and/or the pneumatic tire (900) relative to each other in a direction that is substantially parallel to the axial direction (AX).
108. The device (100) of any of the examples 101 to 107, comprising
   - a second actuator (134) configured to move the primary studding head (400) and/or the pneumatic tire (900) relative to each other in a direction that has a non-zero component in a direction that is perpendicular to the axial direction AX.
109. The device (100) of any of the examples 101 to 108, wherein
   - the tire holder (210) is configured to rotate the pneumatic tire (900).
110. The device (100) of any of the examples 101 to 109, comprising
   - a first tilt (142) configured to turn the primary studding head (400) such that the primary direction (D410) forms an angle (φ) relative to a plane (Q410) defined by the location of the primary mouth (410), and a normal (N) of the tread (930) and a circumferential direction of the tire to be studded at the location of the primary mouth (410);
      preferably,
   - the angle (φ) is at least 5 degrees.
111. The device (100) of any of the examples 101 to 110, comprising
   - a second tilt (144) configured to turn the primary studding head (400) such that the primary direction (D410) forms an angle (γ) relative to a plane (P410) defined by the axis of rotation (AX) of the tire (900) and the location of the primary mouth (410);
      preferably,
   - the angle (γ) is at least 5 degrees.
112. The device of any of the examples 101 to 111, wherein the primary studding head (400) comprises
   - a number of primary jaws (440, 441, 442) located laterally around the primary mouth (410) and movable to an open position (IN) and closed position (OUT);
      preferably,
   - the primary studding head comprises at least three primary jaws (440), such as only three primary jaws (440).
151. Use of the device (100) of any of the examples 101 to 112, wherein
   - the primary studding head (400) is used to drive a first primary stud (911) into the tire in a first primary orientation (O1), thereafter
   - the primary rotator (110) is used to rotate the primary studding head (400) about an axis (AX400) that is parallel to the primary direction (D410), and thereafter
   - the primary studding head (400) is used to drive a second primary stud (911) into the tire in a second primary orientation (O2) such that
   - the a first primary orientation (O1) is different from the second primary orientation (O2).
199. The device of any of the examples 101 to 112, comprising
   - a secondary studding head (500) comprising
      - a secondary mouth (510) for injecting a secondary stud (912) out of the secondary studding head (500) into another one of the stud holes (920) of the pneumatic tire (900) in a secondary direction (D510),
      - a secondary bore (520) for guiding the secondary stud (912), the secondary bore (520) ending at the secondary mouth (510), and
      - a secondary pusher (530) movable in said secondary bore (520) for pushing the secondary stud (912) out from the secondary bore (520) in the secondary direction (D510);
      optionally, the device of further comprises
   - a tertiary studding head comprising
      - a tertiary mouth for injecting a tertiary stud out of the tertiary studding head into another one of the stud holes (920) of the pneumatic tire (900) in a tertiary direction,
      - a tertiary bore for guiding the tertiary stud, the tertiary bore ending at the tertiary mouth, and
      - a tertiary pusher movable in said tertiary bore for pushing the tertiary stud out from the tertiary bore in the tertiary direction.
200. The device (100) of the example 199, comprising
   - a studding tool (300), the studding tool (300) comprising the primary studding head (400) and the secondary studding head (500) and
   - a first actuator (130) configured to move the studding tool (300) and/or the tire holder (210) relative to each other at least in a direction that has a non-zero component in the axial direction (AX).
201. A device (100) for driving antiskid studs (800, 911, 912) into stud holes (920) of a tread (930) of a pneumatic tire (900), the device (100) comprising
   - a tire holder (210) for holding a pneumatic tire (900), the tire holder (210) defining an axial direction (AX) that is parallel to an axis of rotation (AX) of the tire (900) configured to be held by the tire holder (210),
   - a studding tool (300), comprising at least
      - a primary studding head (400) comprising
         ∘ a primary mouth (410) for injecting a primary stud (911) out of the primary studding head (400) into one of the stud holes (920) in a primary direction (D410),
         ∘ a primary bore (420) for guiding the primary stud (911), the primary bore (420) ending at the primary mouth (410), and
         ∘ a primary pusher (430) movable in said primary bore (420) for pushing the primary stud (911) out from the primary bore (420) and
      - a secondary studding head (500) comprising
         ∘ a secondary mouth (510) for injecting a secondary stud (912) out of the secondary studding head (500) into another one of the stud holes (920) in a secondary direction (D510),
         ∘ a secondary bore (520) for guiding the secondary stud (912), the secondary bore (520) ending at the secondary mouth (510), and
         ∘ a secondary pusher (530) movable in said secondary bore (520) for pushing the secondary stud (912) out from the secondary bore (520), and
   - a first actuator (130) configured to move the studding tool (300) and/or the tire holder (210) relative to each other at least in a direction that has a non-zero component in the axial direction (AX).
202. The device of any of the examples 199 to 201, wherein the device is configured to
   - engage the primary pusher (430) at a first instance of time (t1) and
   - engage the secondary pusher (530) at a second instance of time (t2) such that
   - the absolute time difference (|t2-t1|) between the first instance of time (t1) and the second instance of time (t2) is always at least 0.1 s.
203. The device of any of the examples 199 to 202, comprising
   - a riser arrangement (120) configured to
      - lift and lower the primary studding head (400) and/or the pneumatic tire (900) relative to each other and
      - lift and lower the secondary studding head (500) and/or the pneumatic tire (900) relative to each other, whereby
   - the primary studding head (400) is configured to be in a lifted position (HI) and a lowered position (LO) and
   - the secondary studding head (500) is configured to be in a lifted position (HI) and a lowered position (LO), wherein the device (100) is configured such that
   - at a time at most one of the primary studding head (400) and the secondary studding head (500) is in the lowered position (LO).
204. The device (100) of the example 203, configured to
   - engage the primary pusher (430) only when the primary studding head (400) is in the lowered position (LO) and
   - engage the secondary pusher (530) only when the secondary studding head (500) is in the lowered position (LO).
205. The device (100) of any of the examples 199 to 204, wherein
   - the studding tool (300) comprises a body (310), to which the primary studding head (400) and the secondary studding head (500) are fixed.
206. The device (100) of the example 205, wherein
   - the primary studding head (400) is fixed to the body (310) at a primary location (L400),
   - the secondary studding head (500) is fixed to the body (310) at a secondary location (L500), and
   - a distance between the primary location (L400) and the secondary location (L500) is constant;
      preferably,
   - a distance between the primary location (L400) and the secondary location (L500) is constant over time throughout the use of the device (100).
207. The device (100) of the example 205 or 206, wherein
   - the studding tool (300) comprises a body (310), to which the primary studding head (400) and the secondary studding head (500) are fixed,
   - the primary studding head (400) is configured to turn about a primary pivot (P400) relative to the body (310) of the studding tool (300), and
   - the secondary studding head (500) is configured to turn about a secondary pivot (P500) relative to the body (310) of the studding tool (300) preferably
   - the secondary studding head (500) is configured to turn about the secondary pivot (P500) irrespective of the turning of the primary studding head (400) about the primary pivot (P400).
208. The device of any of the examples 199 to 207, wherein
   - the primary studding head (400) and the secondary studding head (500) are pivotable simultaneously such that
      - an angle (β) between the primary direction (D410) and the secondary direction (D510) is constant over time,
      - at a first instance of time, the primary direction (D410) is substantially parallel or substantially reverse to a normal (N) of the tread (930) of the tire (900), and
      - at a second instance of time, the secondary direction (D510) is substantially parallel or substantially reverse to a normal (N) of the tread (930) of the tire (900);
      preferably,
   - the primary direction (410) forms a non-zero angle (β) with the secondary direction (510), wherein
      - the non-zero angle (β) is constant over time and
      - the non-zero angle (β) is at least two degrees;
         more preferably,
      - the non-zero angle (β) is constant over time throughout the use of the device (100).
209. The device (100) the example 208, wherein
   - the primary studding head (400) and the secondary studding head (500) are pivotable simultaneously about a common pivot (450).
210. The device (100) the example 208 or 209, wherein
   - the studding tool (300) comprises a body (310), to which the primary studding head (400) and the secondary studding head (500) are fixed; preferably
      [A]
         - the body (310), the primary studding head (400) and the secondary studding head (500) are configured to pivot simultaneously about a common axis or
      [B]
         - the primary studding head (400) and the secondary studding head (500) are configured to pivot about a common pivot arranged in the body (310).
211. The device (100) of any of the examples 199 to 210, wherein
   [A]
      - the primary studding head (400) is configured to drive a primary stud (911) into the tire (900) in a primary orientation (O1),
      - the secondary studding head (500) is configured to drive a secondary stud (912) into the tire (900) in a secondary orientation (O2), and
   [B]
      - the type of the primary stud (911) is different from the type of the secondary stud (912) and/or
      - the orientation (O1) of the primary stud (911) is different from the orientation (O2) of the secondary stud (912).
212. The device of any of the examples 199 to 211, comprising
   - a secondary rotator (112) configured to rotate the secondary studding head (500) about an axis that is parallel to the secondary direction (D510).
213. The device (100) of any of the examples 199 to 212, wherein
   - the secondary studding head (500) comprises a number of secondary jaws (540, 541, 542) located laterally around the secondary mouth (510) and movable to an open position and closed position;
      preferably,
   - the secondary studding head (500) comprises at least three secondary jaws (540, 541, 542), such as only three secondary jaws (540, 541, 542).
214. The device (100) of any of the examples 201 to 213 comprising
   - a tertiary studding head comprising
      - a tertiary mouth for injecting a tertiary stud out of the tertiary studding head into another one of the stud holes (920) of the pneumatic tire (900) in a tertiary direction,
      - a tertiary bore for guiding the tertiary stud, the tertiary bore ending at the tertiary mouth, and
      - a tertiary pusher movable in said tertiary bore for pushing the tertiary stud out from the tertiary bore in the tertiary direction.
215. The device (100) of the example 214, wherein
   - the studding tool (300) comprises the tertiary studding head.
251. Use of the device (100) of any of the examples 199 to 215, wherein
   - the primary studding head (400) is used to drive a primary stud (911) into the tire in a primary orientation (O1) and
   - the secondary studding head (500) is used to drive a secondary stud (912) into the tire in a secondary orientation (O2) such that
   - the type of the primary stud (911) is different from the type of the secondary stud (912) and/or
   - the orientation (O1) of the primary stud (911) is different from the orientation (O2) of the secondary stud (912).
301. A pneumatic tire (900) having a tread (930), which is arranged, in use of the pneumatic tire (900), to rotate about an axis (AX) of rotation and to make a rolling contact with a surface, the pneumatic tire (900) comprising
   - a first stud (801) extending in a longitudinal direction (Szn1) of the first stud (801), the first stud (801) having a tip (840) protruding from the tread (930) in the longitudinal direction (Szn1) such that
   - the longitudinal direction (Szn1) of the first stud (801) forms a first angle (γ') with a first plane (P410) defined by the location of the first stud (801) and the axis (AX) of rotation of the pneumatic tire (900).
302. The pneumatic tire (900) of the example 301, wherein
   - the first angle (γ') is at least 5 degrees, such as at least 10 degrees, at least 15 degrees, or at least 20 degrees.
303. The pneumatic tire (900) of the example 301 or 302, wherein
   - the pneumatic tire (900) is configured to rotate about the axis (AX) of rotation in a direction of rotation (R), and
      [i]
         - the first angle (γ') opens, as seen from the first plane (P410), to a direction that is reverse to the direction of rotation (R) or
      [ii]
         - the first angle (γ') opens, as seen from the first plane (P410), to the direction of rotation (R).
304. The pneumatic tire (900) of any of the examples 301 to 303, wherein
   - the longitudinal direction (Szn1) of the first stud (801) belongs to a plane (Q410) defined by the location of the first stud (801), and a normal (N) of the tread (930) and a circumferential direction (SC) of the tire (900) at the location of the first stud (801).
305. The pneumatic tire (900) of any of the examples 301 to 304, wherein
   - the longitudinal direction (Szn1) of the first stud (801) forms a second angle (φ') with a second plane (Q410) defined by the location of the first stud (801), and a normal (N) of the tread (930) and a circumferential direction (SC) of the tire (900) at the location of the first stud (801).
306. A pneumatic tire (900) having a tread (930), which is arranged, in use of the pneumatic tire (900), to rotate about an axis (AX) of rotation and to make a rolling contact with a surface, the pneumatic tire (900) comprising
   - a first stud (801) defining a first angle (γ') relative to a plane and
   - a second stud (802), the second stud (802) extending in a longitudinal direction (Szn2) of the second stud (802) and having a tip (840) protruding from the tread (930) in the longitudinal direction (Szn2) of the second stud (802) such that
   - the longitudinal direction (Szn2) of the second stud (802) forms a second angle (φ') with a second plane (Q410) defined by the location of the second stud (802), and a normal (N) of the tread (930) and a circumferential direction (SC) of the tire (900) at the location of the second stud (802).
307. The pneumatic tire (900) of any of the examples 301 to 305, comprising
   - a second stud (802) extending in a longitudinal direction (Szn2) of the second stud (802), the second stud (802) having a tip (840) protruding from the tread (930) in the longitudinal direction (Szn2) of the second stud (802) such that
   - the longitudinal direction (Szn2) of the second stud (802) forms a second angle (φ') with a second plane (Q410) defined by the location of the second stud (802), and a normal (N) of the tread (930) and a circumferential direction (SC) of the tire (900) at the location of the second stud (802).
308. The pneumatic tire (900) of the example 306 or 307, wherein
   - the longitudinal direction (Szn2) of the second stud (802) belongs to a plane (P410) defined by the location of the second stud (802) and the axis (AX) of rotation of the pneumatic tire (900).
309. The pneumatic tire (900) of any of the examples 305 to 308, wherein
   - the second angle (φ') is at least 5 degrees, such as at least 10 degrees, at least 15 degrees, or at least 20 degrees.
310. The pneumatic tire (900) of any of the examples 305 to 309, wherein
   - the pneumatic tire (900) has two sidewalls (940), and
      [i]
         - the second angle (φ') opens, as seen from the second plane (Q410) towards that sidewall (940) of the two sidewalls (940) of the pneumatic tire (940) that is closer to the intersection of the second plane (Q410) and the tread (930) of the tire or
      [ii]
         - the second angle (φ') opens, as seen from the second plane (Q410) towards that sidewall (940) of the two sidewalls (940) of the pneumatic tire (940) that is further away from the intersection of the second plane (Q410) and the tread (930) of the tire.
311. The pneumatic tire (900) of any of the examples 301 to 310, comprising
   - a further stud (803) extending in a longitudinal direction (Szn3) of the further stud (803), the further stud (803) having a tip (840) protruding from the tread (930) in the longitudinal direction (Szn3) of the further stud (803) such that
   - the longitudinal direction (Szn3) of the further stud (803) is substantially parallel to a normal (N) of the tread (930) at the location of the further stud (803).

## Claims

1. A device (100) for driving antiskid studs (800, 911, 912) into stud holes (920) of a tread (930) of a pneumatic tire (900), the device (100) comprising
- a tire holder (210) for holding a pneumatic tire (900), the tire holder (210) defining an axial direction (AX) that is parallel to an axis of rotation (AX) of the tire (900) configured to be held by the tire holder (210),
- a studding tool (300), comprising
• a primary studding head (400) comprising
∘ a primary mouth (410) for injecting a primary stud (911) out of the primary studding head (400) into one of the stud holes (920) in a primary direction (D410),
∘ a primary bore (420) for guiding the primary stud (911), the primary bore (420) ending at the primary mouth (410), and
∘ a primary pusher (430) movable in said primary bore (420) for pushing the primary stud (911) out from the primary bore (420) and
• a secondary studding head (500) comprising
∘ a secondary mouth (510) for injecting a secondary stud (912) out of the secondary studding head (500) into another one of the stud holes (920) in a secondary direction (D510),
∘ a secondary bore (520) for guiding the secondary stud (912), the secondary bore (520) ending at the secondary mouth (510), and
∘ a secondary pusher (530) movable in said secondary bore (520) for pushing the secondary stud (912) out from the secondary bore (520),
**characterized by**
- a first actuator (130) configured to move the studding tool (300) and/or the tire holder (210) relative to each other at least in a direction that has a non-zero component in the axial direction (AX), and in that
- the studding tool (300) comprises a body (310), to which the primary studding head (400) and the secondary studding head (500) are fixed,
- the primary studding head (400) is fixed to the body (310) at a primary location (L400),
- the secondary studding head (500) is fixed to the body (310) at a secondary location (L500), and
- a distance between the primary location (L400) and the secondary location (L500) is constant.

2. The device of the claim 1, wherein the device is configured to
- engage the primary pusher (430) at a first instance of time (t1) and
- engage the secondary pusher (530) at a second instance of time (t2) such that
- the absolute time difference (|t2-t1|) between the first instance of time (t1) and the second instance of time (t2) is always at least 0.1 s.

3. The device of the claim 1 or 2, comprising
- a riser arrangement (120) configured to
• lift and lower the primary studding head (400) and/or the pneumatic tire (900) relative to each other and
• lift and lower the secondary studding head (500) and/or the pneumatic tire (900) relative to each other, whereby
- the primary studding head (400) is configured to be in a lifted position (HI) and a lowered position (LO) and
- the secondary studding head (500) is configured to be in a lifted position (HI) and a lowered position (LO), wherein the device (100) is configured such that
- at a time at most one of the primary studding head (400) and the secondary studding head (500) is in the lowered position (LO).

4. The device (100) of any of the claims 1 to 3, configured to
- engage the primary pusher (430) only when the primary studding head (400) is in the lowered position (LO) and
- engage the secondary pusher (530) only when the secondary studding head (500) is in the lowered position (LO).

5. The device (100) of any of the claims 1 to 4, wherein
- the primary studding head (400) is configured to turn about a primary pivot (P400) relative to the body (310) of the studding tool (300), and
- the secondary studding head (500) is configured to turn about a secondary pivot (P500) relative to the body (310) of the studding tool (300) preferably
- the secondary studding head (500) is configured to turn about the secondary pivot (P500) irrespective of the turning of the primary studding head (400) about the primary pivot (P400).

6. The device of any of the claims 1 to 5, wherein
- the primary studding head (400) and the secondary studding head (500) are pivotable simultaneously such that
• an angle (β) between the primary direction (D410) and the secondary direction (D510) is constant over time,
• at a first instance of time, the primary direction (D410) is substantially parallel or substantially reverse to a normal (N) of the tread (930) of the tire (900), and
• at a second instance of time, the secondary direction (D510) is substantially parallel or substantially reverse to a normal (N) of the tread (930) of the tire (900);
preferably,
- the primary direction (410) forms a non-zero angle (β) with the secondary direction (510), wherein
• the non-zero angle (β) is constant over time and
• the non-zero angle (β) is at least two degrees.

7. The device (100) the claim 6, wherein
- the primary studding head (400) and the secondary studding head (500) are pivotable simultaneously about a common pivot (450).

8. The device (100) the claim 6 or 7, wherein
- the studding tool (300) comprises a body (310), to which the primary studding head (400) and the secondary studding head (500) are fixed; preferably
[A]
- the body (310), the primary studding head (400), and the secondary studding head (500) are configured to pivot simultaneously about a common axis or
[B]
- the primary studding head (400) and the secondary studding head (500) are configured to pivot about a common pivot arranged in the body (310).

9. The device (100) of any of the claims 1 to 8, wherein
[A]
- the primary studding head (400) is configured to drive a primary stud (911) into the tire (900) in a primary orientation (O1),
- the secondary studding head (500) is configured to drive a secondary stud (912) into the tire (900) in a secondary orientation (O2), and
[B]
- the type of the primary stud (911) is different from the type of the secondary stud (912) and/or
- the orientation (O1) of the primary stud (911) is different from the orientation (O2) of the secondary stud (912).

10. The device of any of the claims 1 to 9, comprising
- a secondary rotator (112) configured to rotate the secondary studding head (500) about an axis that is parallel to the secondary direction (D510).

11. The device (100) of any of the claims 1 to 10, wherein
- the secondary studding head (500) comprises a number of secondary jaws (540, 541, 542) located laterally around the secondary mouth (510) and movable to an open position and closed position;
preferably,
- the secondary studding head (500) comprises at least three secondary jaws (540, 541, 542), such as only three secondary jaws (540, 541, 542).

12. Use of the device (100) of any of the claims 1 to 11, wherein
- the primary studding head (400) is used to drive a primary stud (911) into the tire in a primary orientation (O1) and
- the secondary studding head (500) is used to drive a secondary stud (912) into the tire in a secondary orientation (O2) such that
- the type of the primary stud (911) is different from the type of the secondary stud (912) and/or
- the orientation (O1) of the primary stud (911) is different from the orientation (O2) of the secondary stud (912).

## Patentansprüche

1. Vorrichtung (100) zum Eintreiben von Anti-Rutsch-Spikes (800, 911, 912) in Spikelöcher (920) einer Lauffläche (930) eines Luftreifens (900), wobei die Vorrichtung (100) Folgendes umfasst:
- eine Reifenhalterung (210) zum Halten eines Luftreifens (900), wobei die Reifenhalterung (210) eine Axialrichtung (AX) definiert, die parallel zu einer Drehachse (AX) des Reifens (900) ist, der dafür konfiguriert ist, von der Reifenhalterung (210) gehalten zu werden,
- ein Bespikungswerkzeug (300) umfassend
• einen primären Bespikungskopf (400) umfassend
∘ eine primäre Öffnung (410) zum Einschießen eines primären Spikes (911) aus dem primären Bespikungskopf (400) in eines der Spikelöcher (920) in einer primären Richtung (D410),
∘ eine primäre Bohrung (420) zum Führen des primären Spikes (911), wobei die primäre Bohrung (420) an der primären Öffnung (410) endet, und
∘ eine primäre Stoßvorrichtung (430), die in der primären Bohrung (420) beweglich ist, um den primären Spike (911) aus der primären Bohrung (420) zu stoßen, und
• einen sekundären Bespikungskopf (500) umfassend
∘ eine sekundäre Öffnung (510) zum Einschießen eines sekundären Spikes (912) aus dem sekundären Bespikungskopf (500) in ein anderes der Spikelöcher (920) in einer sekundären Richtung (D510),
∘ eine sekundäre Bohrung (520) zum Führen des sekundären Spikes (912), wobei die sekundäre Bohrung (520) an der sekundären Öffnung (510) endet, und
∘ eine sekundäre Stoßvorrichtung (530), die in der sekundären Bohrung (520) beweglich ist, um den sekundären Spike (912) aus der sekundären Bohrung (520) zu stoßen,
**gekennzeichnet durch**
- einen ersten Aktor (130), der dafür konfiguriert ist, das Bespikungswerkzeug (300) und/oder die Reifenhalterung (210) relativ zueinander zumindest in einer Richtung zu bewegen, die eine von Null verschiedene Komponente in der Axialrichtung (AX) aufweist,
**und dadurch gekennzeichnet, dass**
- das Bespikungswerkzeug (300) einen Körper (310) umfasst, an welchem der primäre Bespikungskopf (400) und der sekundäre Bespikungskopf (500) befestigt sind,
- der primäre Bespikungskopf (400) an einer primären Stelle (L400) an dem Körper (310) befestigt ist,
- der sekundäre Bespikungskopf (500) an einer sekundären Stelle (L500) an dem Körper (310) befestigt ist und
- ein Abstand zwischen der primären Stelle (L400) und der sekundären Stelle (L500) gleich bleibt.

2. Vorrichtung nach Anspruch 1, wobei die Vorrichtung dafür konfiguriert ist,
- die primäre Stoßvorrichtung (430) an einem ersten Zeitpunkt (t1) in Eingriff zu nehmen und
- die sekundäre Stoßvorrichtung (530) an einem zweiten Zeitpunkt (t2) in Eingriff zu nehmen, derart dass
- die absolute Zeitdifferenz (|t2 - t1|) zwischen dem ersten Zeitpunkt (t1) und dem zweiten Zeitpunkt (t2) immer mindestens 0,1 s beträgt.

3. Vorrichtung nach Anspruch 1 oder 2, umfassend
- eine Hebeanordnung (120), die dafür konfiguriert ist,
• den primären Bespikungskopf (400) und/oder den Luftreifen (900) relativ zueinander anzuheben und abzusenken und
• den sekundären Bespikungskopf (500) und/oder den Luftreifen (900) relativ zueinander anzuheben und abzusenken, wodurch
- der primäre Bespikungskopf (400) dafür konfiguriert ist, in einer angehobenen Position (HI) und einer abgesenkten Position (LO) zu sein, und
- der sekundäre Bespikungskopf (500) dafür konfiguriert ist, in einer angehobenen Position (HI) und einer abgesenkten Position (LO) zu sein, wobei die Vorrichtung (100) derart konfiguriert ist, dass
- zu einem Zeitpunkt höchstens einer von dem primären Bespikungskopf (400) und dem sekundären Bespikungskopf (500) sich in der abgesenkten Position (LO) befindet.

4. Vorrichtung (100) nach irgendeinem der Ansprüche 1 bis 3, die dafür konfiguriert ist,
- die primäre Stoßvorrichtung (430) nur in Eingriff zu nehmen, wenn der primäre Bespikungskopf (400) sich in der abgesenkten Position (LO) befindet, und
- die sekundäre Stoßvorrichtung (530) nur in Eingriff zu nehmen, wenn der sekundäre Bespikungskopf (500) sich in der abgesenkten Position (LO) befindet.

5. Vorrichtung (100) nach irgendeinem der Ansprüche 1 bis 4, wobei
- der primäre Bespikungskopf (400) dafür konfiguriert ist, ein primäres Gelenk (P400) relativ zum Körper (310) des Bespikungswerkzeugs (300) umzudrehen, und
- der sekundäre Bespikungskopf (500) dafür konfiguriert ist, ein sekundäres Gelenk (P500) relativ zum Körper (310) des Bespikungswerkzeugs (300) umzudrehen,
vorzugsweise
- der sekundäre Bespikungskopf (500) dafür konfiguriert ist, das sekundäre Gelenk (P500) unabhängig von der Drehung des primären Bespikungskopfs (400) um das primäre Gelenk (P400) umzudrehen.

6. Vorrichtung (100) nach irgendeinem der Ansprüche 1 bis 5, wobei
- der primäre Bespikungskopf (400) und der sekundäre Bespikungskopf (500) gleichzeitig derart schwenkbar sind, dass
• ein Winkel (β) zwischen der primären Richtung (D410) und der sekundären Richtung (D510) im Zeitverlauf gleich bleibt,
• an einem ersten Zeitpunkt die primäre Richtung (D410) im Wesentlichen parallel oder im Wesentlichen umgekehrt zu einer Normalen (N) der Lauffläche (930) des Reifens (900) ist und
• an einem zweiten Zeitpunkt die sekundäre Richtung (D510) im Wesentlichen parallel oder im Wesentlichen umgekehrt zu einer Normalen (N) der Lauffläche (930) des Reifens (900) ist;
wobei vorzugsweise
- die primäre Richtung (410) einen von Null verschiedenen Winkel (β) mit der sekundären Richtung (510) bildet, wobei
• der von Null verschiedene Winkel (β) im Zeitverlauf gleich bleibt und
• der von Null verschiedene Winkel (β) mindestens zwei Grad beträgt.

7. Vorrichtung (100) nach Anspruch 6, wobei
- der primäre Bespikungskopf (400) und der sekundäre Bespikungskopf (500) gleichzeitig um ein gemeinsames Gelenk (450) schwenkbar sind.

8. Vorrichtung (100) nach Anspruch 6 oder 7, wobei
- das Bespikungswerkzeug (300) einen Körper (310) umfasst, an welchem der primäre Bespikungskopf (400) und der sekundäre Bespikungskopf (500) befestigt sind;
vorzugsweise
[A]
- der Körper (310), der primäre Bespikungskopf (400) und der sekundäre Bespikungskopf (500) dafür konfiguriert sind, gleichzeitig um eine gemeinsame Achse zu schwenken, oder
[B]
- der primäre Bespikungskopf (400) und der sekundäre Bespikungskopf (500) dafür konfiguriert sind, um ein gemeinsames Gelenk zu schwenken, das in dem Körper (310) angeordnet ist.

9. Vorrichtung (100) nach irgendeinem der Ansprüche 1 bis 8, wobei
[A]
- der primäre Bespikungskopf (400) dafür konfiguriert ist, einen primären Spike (911) in einer primären Orientierung (O1) in den Reifen (900) einzutreiben,
- der sekundäre Bespikungskopf (500) dafür konfiguriert ist, einen sekundären Spike (912) in einer sekundären Orientierung (O2) in den Reifen (900) einzutreiben, und
[B]
- der Typ des primären Spikes (911) von dem Typ des sekundären Spikes (912) verschieden ist und/oder
- die Orientierung (O1) des primären Spikes (911) von der Orientierung (O2) des sekundären Spikes (912) verschieden ist.

10. Vorrichtung nach irgendeinem der Ansprüche 1 bis 9, umfassend
- eine sekundäre Drehvorrichtung (112), die dafür konfiguriert ist, den sekundären Bespikungskopf (500) um eine Achse zu drehen, die parallel zur sekundären Richtung (D510) ist.

11. Vorrichtung (100) nach irgendeinem der Ansprüche 1 bis 10, wobei
- der sekundäre Bespikungskopf (500) eine Anzahl von sekundären Backen (540, 541, 542) umfasst, die seitlich rings um die sekundäre Öffnung (510) angeordnet sind und in eine offene Position und eine geschlossene Position beweglich sind;
vorzugsweise
- der sekundäre Bespikungskopf (500) mindestens drei sekundäre Backen (540, 541, 542) umfasst, beispielsweise nur drei sekundäre Backen (540, 541, 542).

12. Verwendung der Vorrichtung (100) nach irgendeinem der Ansprüche 1 bis 11, wobei
- der primäre Bespikungskopf (400) verwendet wird, um einen primären Spike (911) in einer primären Orientierung (O1) in den Reifen einzutreiben, und
- der sekundäre Bespikungskopf (500) verwendet wird, um einen sekundären Spike (912) in einer sekundären Orientierung (O2) in den Reifen einzutreiben, derart dass
- der Typ des primären Spikes (911) von dem Typ des sekundären Spikes (912) verschieden ist und/oder
- die Orientierung (O1) des primären Spikes (911) von der Orientierung (O2) des sekundären Spikes (912) verschieden ist.

## Revendications

1. Dispositif (100) pour enfoncer des clous antidérapants (800, 911, 912) dans des trous de clous (920) d'une bande de roulement (930) d'un pneu (900), le dispositif (100) comprenant
- un porte-pneu (210) pour maintenir un pneu (900), le porte-pneu (210) définissant une direction axiale (AX) qui est parallèle à un axe de rotation (AX) du pneu (900) configuré pour être maintenu par le porte-pneu (210),
- un outil de cloutage (300), comprenant
• une tête de cloutage primaire (400) comprenant
∘ une embouchure primaire (410) pour injecter un clou primaire (911) hors de la tête de cloutage primaire (400) dans l'un des trous de clous (920) dans une direction primaire (D410),
∘ un alésage primaire (420) pour guider le clou primaire (911), l'alésage primaire (420) se terminant au niveau de l'embouchure primaire (410), et
∘ un poussoir primaire (430) mobile dans ledit alésage primaire (420) pour pousser le clou primaire (911) hors de l'alésage primaire (420) et
• une tête de cloutage secondaire (500) comprenant
∘ une embouchure secondaire (510) pour injecter un clou secondaire (912) hors de la tête de cloutage secondaire (500) dans un autre trou des trous de clous (920) dans une direction secondaire (D510),
∘ un alésage secondaire (520) pour guider le clou secondaire (912), l'alésage secondaire (520) se terminant au niveau de l'embouchure secondaire (510), et
∘ un poussoir secondaire (530) mobile dans ledit alésage secondaire (520) pour pousser le clou secondaire (912) hors de l'alésage secondaire (520),
**caractérisé par**
- un premier actionneur (130) configuré pour déplacer l'outil de cloutage (300) et/ou le porte-pneu (210) l'un par rapport à l'autre au moins dans une direction qui a une composante non nulle dans la direction axiale (AX), et en ce que
- l'outil de cloutage (300) comprend un corps (310), auquel sont fixées la tête de cloutage primaire (400) et la tête de cloutage secondaire (500),
- la tête de cloutage primaire (400) est fixée au corps (310) à un emplacement primaire (L400),
- la tête de cloutage secondaire (500) est fixée au corps (310) à un emplacement secondaire (L500), et
- une distance entre l'emplacement primaire (L400) et l'emplacement secondaire (L500) est constante.

2. Dispositif de la revendication 1, dans lequel le dispositif est configuré pour
- engager le poussoir primaire (430) à un premier instant (t1) et
- engager le poussoir secondaire (530) à un deuxième instant (t2) de sorte que
- la différence de temps absolue (|t2-t1|) entre le premier instant (t1) et le deuxième instant (t2) soit toujours d'au moins 0,1 s.

3. Dispositif de la revendication 1 ou 2, comprenant
- un agencement de colonne montante (120) configuré pour
• soulever et abaisser la tête de cloutage primaire (400) et/ou le pneu (900) l'un(e) par rapport à l'autre et
• soulever et abaisser la tête de cloutage secondaire (500) et/ou le pneu (900) l'un(e) par rapport à l'autre, moyennant quoi
- la tête de cloutage primaire (400) est configurée pour être dans une position levée (HI) et une position abaissée (LO) et
- la tête de cloutage secondaire (500) est configurée pour être dans une position levée (HI) et une position abaissée (LO), dans lequel le dispositif (100) est configuré de sorte que
- à la fois au plus l'une de la tête de cloutage primaire (400) et de la tête de cloutage secondaire (500) soit en position abaissée (LO).

4. Dispositif (100) de l'une des revendications 1 à 3, configuré pour
- engager le poussoir primaire (430) uniquement lorsque la tête de cloutage primaire (400) est en position abaissée (LO) et
- engager le poussoir secondaire (530) uniquement lorsque la tête de cloutage secondaire (500) est en position abaissée (LO).

5. Dispositif (100) de l'une des revendications 1 à 4, dans lequel
- la tête de cloutage primaire (400) est configurée pour tourner autour d'un pivot primaire (P400) par rapport au corps (310) de l'outil de cloutage (300), et
- la tête de cloutage secondaire (500) est configurée pour tourner autour d'un pivot secondaire (P500) par rapport au corps (310) de l'outil de cloutage (300),
de préférence
- la tête de cloutage secondaire (500) est configurée pour tourner autour du pivot secondaire (P500) indépendamment de la rotation de la tête de cloutage primaire (400) autour du pivot primaire (P400).

6. Dispositif de l'une des revendications 1 à 5, dans lequel
- la tête de cloutage primaire (400) et la tête de cloutage secondaire (500) peuvent pivoter simultanément de sorte que
• un angle (β) entre la direction primaire (D410) et la direction secondaire (D510) soit constant dans le temps,
• à un premier instant, la direction primaire (D410) soit sensiblement parallèle ou sensiblement inverse à une normale (N) de la bande de roulement (930) du pneu (900), et
• à un deuxième instant, la direction secondaire (D510) soit sensiblement parallèle ou sensiblement inverse à une normale (N) de la bande de roulement (930) du pneu (900) ;
de préférence,
- la direction primaire (410) forme un angle non nul (β) avec la direction secondaire (510), dans laquelle
• l'angle non nul (β) est constant dans le temps et
• l'angle non nul (β) est d'au moins deux degrés.

7. Dispositif (100) de la revendication 6, dans lequel
- la tête de cloutage primaire (400) et la tête de cloutage secondaire (500) peuvent pivoter simultanément autour d'un pivot commun (450).

8. Dispositif (100) de la revendication 6 ou 7, dans lequel
- l'outil de cloutage (300) comprend un corps (310), auquel sont fixées la tête de cloutage primaire (400) et la tête de cloutage secondaire (500) ;
de préférence
[A]
- le corps (310), la tête de cloutage primaire (400) et la tête de cloutage secondaire (500) sont configurés pour pivoter simultanément autour d'un axe commun ou
[B]
- la tête de cloutage primaire (400) et la tête de cloutage secondaire (500) sont configurées pour pivoter autour d'un pivot commun agencé dans le corps (310).

9. Dispositif (100) de l'une des revendications 1 à 8, dans lequel
[A]
- la tête de cloutage primaire (400) est configurée pour enfoncer un clou primaire (911) dans le pneu (900) dans une orientation primaire (O1),
- la tête de cloutage secondaire (500) est configurée pour enfoncer un clou secondaire (912) dans le pneu (900) dans une orientation secondaire (O2), et
[B]
- le type du clou primaire (911) est différent du type du clou secondaire (912) et/ou
- l'orientation (O1) du clou primaire (911) est différente de l'orientation (O2) du clou secondaire (912).

10. Dispositif de l'une des revendications 1 à 9, comprenant
- un rotateur secondaire (112) configuré pour faire tourner la tête de cloutage secondaire (500) autour d'un axe qui est parallèle à la direction secondaire (D510).

11. Dispositif (100) de l'une des revendications 1 à 10, dans lequel
- la tête de cloutage secondaire (500) comprend un certain nombre de mâchoires secondaires (540, 541, 542) situées latéralement autour de l'embouchure secondaire (510) et mobiles vers une position ouverte et une position fermée ;
de préférence,
- la tête de cloutage secondaire (500) comprend au moins trois mâchoires secondaires (540, 541, 542), par exemple seulement trois mâchoires secondaires (540, 541, 542).

12. Utilisation du dispositif (100) de l'une des revendications 1 à 11, dans laquelle
- la tête de cloutage primaire (400) est utilisée pour enfoncer un clou primaire (911) dans le pneu dans une orientation primaire (O1) et
- la tête de cloutage secondaire (500) est utilisée pour enfoncer un clou secondaire (912) dans le pneu dans une orientation secondaire (O2) de sorte que
- le type du clou primaire (911) soit différent du type du clou secondaire (912) et/ou
- l'orientation (O1) du clou primaire (911) soit différente de l'orientation (O2) du clou secondaire (912).
